# EUROPÄISCHE PATENTSCHRIFT

(11) **EP 3 243 008 B1**
(45) Veröffentlichungstag und Bekanntmachung des Hinweises auf die Patenterteilung: **25.12.2019**
(21) Anmeldenummer: 15816807.0
(22) Anmeldetag: 23.12.2015
(51) Int. Cl.: F16B 12/12

(54) **VERBINDUNGSBESCHLAG**
CONNECTING FITTING
RACCORD DE LIAISON

(30) Priorität: 08.01.2015 DE 102015100199
(43) Veröffentlichungstag der Anmeldung: 15.11.2017
(73) Patentinhaber: Festool GmbH, 73240 Wendlingen am Neckar (DE)
(72) Erfinder: SATRAZANIS, Antonios, 75630 Remshalden (DE); LEROY, Jérôme Erwin, 73230 Kichheim unter Teck (DE); ROSSAINT, Jens, 51515 Kürten (DE); WIEDMANN, Helmut, 73569 Eschach (DE); ILLING, Simon Georg Johannes, 72622 Nürtingen (DE); REINES, Wolfgang, 72655 Altdorf (DE); KÖNIG, Steffen, 73525 Schwäbisch Gmünd (DE)
(74) Vertreter: Patentanwälte Bregenzer und Reule Partnerschaftsgesellschaft mbB
(86) Internationale Anmeldenummer: PCT/EP2015/081144
(87) Internationale Veröffentlichungsnummer: WO 2016/110417

(56) Entgegenhaltungen:
- DE-A1-102009 011 845
- DE-B3-102006 024 265

## Beschreibung

Die Erfindung betrifft einen Verbindungsbeschlag zur Verbindung eines ersten Werkstücks und eines zweiten Werkstücks, gemäß dem Oberbegriff des Anspruchs 1.

Ein derartiger Verbindungsbeschlag ist beispielsweise in DE 10 2006 024 265 B3 erläutert.

Die Ausnehmungen im ersten und zweiten Werkstück für einen Verbindungsbeschlag gemäß DE 10 2009 011 845 A1 fluchten miteinander, sodass in einfacher Weise zunächst das Ankermodul im ersten Werkstück verankert wird und dann das zweite Werkstück mit dem ersten Werkstück dadurch verbunden wird, dass sich das Widerlagermodul in der Widerlagerausnehmung abstützt, mit dem Ankermodul verbunden wird und somit die beiden Werkstücke gegeneinander spannt. Die Montage des Verbindungsbeschlags ist zwar einfach, der Halt des Widerlagermoduls jedoch beschränkt. Zudem steht das Widerlagermodul regelmäßig vor eine Frontseite des zweiten Werkstücks vor, was zumindest optisch unschön ist, in manchen Fällen auch mechanisch störend.

Es ist daher die Aufgabe der vorliegenden Erfindung, einen verbesserten Verbindungsbeschlag vorzuschlagen.

Zur Lösung der Aufgabe ist ein Verbindungsbeschlag gemäß der technischen Lehre des Anspruchs 1 vorgesehen.

Das Ankermodul oder das Widerlagermodul oder beide stützen sich also mit ihrer von ihrer jeweiligen Längsachse durchsetzten Außenkontur an der zugeordneten Verankerungsausnehmung oder Widerlagerausnehmung ab. Dadurch ist eine optimale Abstützung quer zur Spannachse gegeben.

Der Verbindungsbeschlag kann beispielsweise dazu dienen, Möbelteile als erstes und zweites Werkstück miteinander zu verbinden. Aber auch bei Gebäuden oder dergleichen kann die Verbindungstechnik gemäß der Erfindung effektiv zum Einsatz kommen.

Der Winkel ist zweckmäßigerweise ein rechter Winkel oder ein Winkel von 90°. Es sind aber auch andere Winkel möglich, beispielsweise ein Winkel von etwa 70-80° oder dergleichen. Vorteilhaft ist es jedenfalls, wenn der Winkel größer als 45° ist, was im Sinne einer optimalen Abstützung ist.

Es ist besonders vorteilhaft, wenn im montierten Zustand des Verbindungsbeschlags die Längsachsen des Ankermoduls und des Widerlagermoduls quer zueinander verlaufen, wenn das Ankermodul und das Widerlagermodul miteinander verbunden sind. Vorteilhaft bildet beispielsweise die Längsachse des Ankermoduls gleichzeitig die Spannachse. Es ist dabei ein Grundgedanke, dass die Längsachsen des Ankermoduls und des Widerlagermoduls zueinander winkelig sind, sodass sich das Widerlagermodul mit seinem Widerlagerstützkörper quer zur Längsachse des Ankermoduls abstützen kann. Dadurch ist ein optimaler Halt gegeben.

Zweckmäßigerweise sind die Längsachsen der Widerlagerausnehmung und der Verbindungsausnehmung entsprechend dem Winkel zwischen dem Ankerstützkörper und dem Widerlagerstützkörper winkelig zueinander.

Die Verbindungsausnehmung hat zweckmäßigerweise eine Längsgestalt, d.h. eine Längslänge der Verbindungsausnehmung und eine Längslänge der Widerlagerausnehmung sind zweckmäßigerweise zumindest etwa gleich groß.

Es ist aber auch möglich, dass die Verbindungsausnehmung verhältnismäßig kurz ist, das heißt dass sich beispielsweise zwischen einer Seitenfläche des zweiten Werkstücks und der Widerlagerausnehmung nur ein schmaler Wandabschnitt erstreckt.

Die Verbindungsausnehmung ist ebenso wie die Widerlagerausnehmung vorteilhaft nur im zweiten Werkstück angeordnet.

Die Verbindungsausnehmung und die Widerlagerausnehmung bilden beispielsweise eine L-förmige Anordnung.

Die Verankerungsausnehmung kann als Durchtrittsöffnung oder als Sackloch ausgestaltet sein. In eine Einstecköffnung der Verankerungsausnehmung ist das Ankermodul einsteckbar.

Die Längsachsen sind vorzugsweise Längsmittelachsen.

Eine bevorzugte Ausführungsform der Erfindung sieht vor, dass die Längsachsen, insbesondere die Längsmittelachsen, des Widerlagermoduls und des Ankermoduls einander schneiden.

Eine bevorzugte Ausführungsform der Erfindung sieht vor, dass die Spannmittel nicht in direkten Kontakt mit dem jeweiligen Werkstück gelangen. Bevorzugt ist vorgesehen, dass die Spannmittel ausschließlich zwischen der Verbindungseinrichtung und dem zugeordneten Ankerstützkörper oder Widerlagerstützkörper wirken. Beispielsweise greift ein entsprechendes Verbindungselement der Verbindungseinrichtung in den jeweiligen Stützkörper zur Verspannung mit dem jeweiligen Stützkörper anhand der Spannmittel ein. Anders als bei bekannten Möbelverbindern, mit denen beispielsweise Seitenwände eines Schrankes mit einem Bodenteil anhand eines Exzenter-Verbinders verbunden werden, gleitet also das jeweilige Spannmittel nicht direkt an der Ausnehmung im Möbelteil oder Werkstück entlang, sondern wirkt auf den Stützkörper. Dieser verbleibt im Prinzip im Wesentlichen ortsfest in der Ausnehmung des Werkstücks (abgesehen von der Verspannung), wodurch die mechanische Belastung des Werkstücks gering ist.

Das Ankermodul und das Widerlagermodul, gegebenenfalls auch ein Verbindungsmodul, eines erfindungsgemäßen Verbindungsbeschlags sind vorzugsweise zur formschlüssigen Anlage in der jeweils zugeordneten Ausnehmung, also der Verankerungsausnehmung, der Widerlagerausnehmung und gegebenenfalls der Verbindungsausnehmung, ausgestaltet. Jedenfalls ist es vorteilhaft, wenn mindestens eines, vorzugsweise alle der vorgenannten Komponenten jeweils eine Außenkontur aufweisen, die zur formschlüssigen Anlage im Innenumfang der zugeordneten Ausnehmung des Werkstücks ausgestaltet sind.

Weiterhin ist es vorteilhaft, wenn das Ankermodul, das Widerlagermodul und gegebenenfalls auch die Komponenten der Verbindungseinrichtung, formschlüssig miteinander verbindbar sind.

Eine bevorzugte Ausführungsform der Erfindung sieht vor, dass die Verbindungseinrichtung derart ausgestaltet ist, dass sie von dem Ankermodul oder dem Widerlagermodul oder beiden entfernbar ist und/oder nicht vor die Verankerungsausnehmung oder die Widerlagerausnehmung oder die Verbindungsausnehmung vorsteht, wenn das Ankermodul in der Verankerungsausnehmung oder das Widerlagermodul in der Widerlagerausnehmung aufgenommen sind. Somit können die Werkstücke im voneinander getrennten Zustand bequem transportiert werden, wobei das Widerlagermodul und das Ankermodul im jeweiligen ersten und zweiten Werkstück ohne weiteres verbleiben können. Die Verbindungseinrichtung stört dabei nicht. Dadurch wird beispielsweise ein Verkratzen empfindlicher Möbeloberflächen durch Beschlagbestandteile vermieden.

Das Ankermodul weist zweckmäßigerweise mindestens einen Klemmkörper auf, welcher durch einen Betätigungskörper aus einer Lösestellung, in welcher das Ankermodul in die Verankerungsausnehmung einführbar ist, in eine Klemmstellung bringbar ist, in welcher der Klemmkörper gegen einen Innenumfang der Verankerungsausnehmung geklemmt ist. Bevorzugt umfasst der mindestens eine Klemmkörper einen oder mehrere Klemmarme. Durch den Betätigungskörper können die Klemmarme oder kann der Klemmarm sozusagen aufgespreizt werden, sodass er sich mit der Verankerungsausnehmung verklemmt.

Es ist möglich, dass der mindestens eine Klemmarm von einem Grundkörper oder dem Ankerstützkörper des Ankermoduls absteht und so die Verklemmung in der Verankerungsausnehmung zusammen mit dem Grundkörper oder dem Ankerstützkörper bewirkt. Mithin stützen sich also der Grundkörper oder der Ankerstützkörper und der Klemmarm am Innenumfang der Verankerungsausnehmung ab.

Bevorzugt ist eine Konfiguration mit mindestens zwei Klemmarmen, die durch den Betätigungskörper in eine Spreizstellung oder Klemmstellung bringbar sind, in welcher sie am Innenumfang der Verankerungsausnehmung in einem Klemmsitz anliegen.

Bevorzugt sind an dem Ankermodul mindestens zwei spreizfußartig durch den Betätigungskörper in die Klemmstellung bringbare Klemmkörper vorgesehen, die durch den Betätigungskörper in eine Spreizstellung oder Klemmstellung bringbar sind, in welcher sich das Ankermodul sozusagen in der Verankerungsausnehmung verankert oder verkeilt oder verkrallt.

Der Betätigungskörper ist vorzugsweise zugfest bezüglich der Längsachse des Ankermoduls mit dem Ankermodul verbindbar und zur Verbindung des Ankermoduls mit dem Widerlagermodul ausgestaltet. Beispielsweise ist der Betätigungskörper in der Art eines Zugstabes ausgestaltet. Der Betätigungskörper kann beispielsweise mit dem Ankermodul verschraubt werden oder anhand einer Steckzapfenverbindung zugfest bezüglich der Längsachse verbunden werden.

Eine bevorzugte Ausführungsform sieht vor, dass der Betätigungskörper einen Steckzapfen aufweist, der in eine Einstecköffnung des Ankermoduls einsteckbar ist und eine Verdrängerfläche aufweist, die durch Verdrehung des Betätigungskörpers in dem Ankermodul den mindestens einen Klemmkörper in die Klemmstellung verdrängt. Die Verdrängungskontur ist beispielsweise ein Bestandteil einer exzentrischen Fläche oder einer Exzenterkontur.

Bevorzugt ist es, wenn eine Relativ-Verdrehung des Betätigungskörpers und des Ankermoduls um weniger als 180° vorzugsweise etwa 90°, ausreicht, dass die Verdrängungskontur den mindestens einen Klemmkörper, insbesondere den Klemmarm, in die Klemmstellung verdrängen kann.

Eine bevorzugte Ausführungsform sieht vor, dass der Steckzapfen eine Außenumfangskontur und die Einstecköffnung eine Innenumfangskontur aufweisen, die in einer zum Einstecken des Steckzapfens in die Einstecköffnung vorgesehenen ersten Steck-Winkelposition des Steckzapfens und der Einstecköffnung bezüglich der Steckachse, beispielsweise der Längsachse des Ankermoduls, eine Längsbewegung des Betätigungskörpers und des Ankermoduls ermöglichen, jedoch in einer dazu verdrehen, beispielsweise um die genannten 180°, vorzugsweise etwa 90°, verdrehten Klemm-Winkelposition den Betätigungskörper zugfest bezüglich der Steckachse oder der Längsachse am Ankermodul halten.

Bevorzugt ist es, wenn in der Klemm-Winkelposition die Außenumfangskonturen des Ankermoduls und eines den Steckzapfen aufweisenden weiteren Moduls, zum Beispiel des nachfolgend noch erläuterten Verbindungsmoduls, miteinander fluchten. In der Steck-Winkelposition muss das so nicht sein, d.h. dass das Ankermodul und das Verbindungsmodul nicht miteinander fluchtende Außenumfangskonturen haben können.

Nun ist es möglich, dass beim Betätigen des Betätigungskörpers im Sinne einer Verstellung des Klemmkörpers in Richtung der Klemmstellung der Klemmkörper sozusagen auf einen Widerstand stößt, nämlich sich nicht ausreichend weit in Richtung der Klemmstellung verstellen lässt, wenn der Klemmkörper beispielsweise am Innenumfang der Verankerungsausnehmung anschlägt. Dann ist sozusagen eine Knautschzone oder eine sonstige Nachgiebigkeit zweckmäßig.

Vorzugsweise ist beispielsweise vorgesehen, dass am Betätigungskörper, am Ankermodul, insbesondere dessen Ankerstützkörper oder dem mindestens einen Klemmkörper, oder beiden, eine Verformungszone vorgesehen ist, die durch eine Verstellung des Betätigungskörpers in Richtung der Klemmstellung des mindestens einen Klemmkörpers dauerhaft verformbar ist. Die Verformungszone ist sozusagen eine Knautschzone.

Eine bevorzugte Ausführungsform sieht vor, dass das Ankermodul, insbesondere der mindestens eine Klemmkörper oder auch der Ankerstützkörper oder ein Grundkörper des Ankermoduls, mindestens einen Formschlussvorsprung aufweist, der zur formschlüssigen Verbindung mit der Verankerungsausnehmung geeignet ist. Aber auch eine Reibschlussfläche ist am Ankermodul oder Klemmkörper oder beiden vorteilhaft. Der mindestens eine Formschlussvorsprung kann beispielsweise eine Verrippung, eine Zahnstruktur oder dergleichen umfassen. Der mindestens eine Formschlussvorsprung hat zweckmäßigerweise eine Eindringkontur, beispielsweise einen Zahn oder einen schmalen Grat, zum Eindringen in das erste Werkstück.

Es versteht sich, dass der Formschlussvorsprung, die Reibschlussfläche und dergleichen auch an einem Grundkörper des Ankermoduls vorgesehen sein können,, der sich in entsprechender Weise dann formschlüssig, reibschlüssig oder dergleichen am Innenumfang der Verankerungsausnehmung Halt findet.

Auch bei dem Widerlagermodul, z.B. dem Widerlagerstützkörper, kann mindestens ein Formschlussvorsprung zur formschlüssigen Verbindung mit der Widerlagerausnehmung vorgesehen sein.

Eine vorteilhafte Ausführungsform der Erfindung sieht vor, dass die Verbindungseinrichtung ein Verbindungsmodul oder ein Verbindungselement, insbesondere in der Art eines Zugstabes zur Anordnung zwischen dem Ankermodul und dem Widerlagermodul umfasst, wobei im montierten Zustand eine Längsachse des Verbindungsmoduls oder Verbindungselements parallel oder koaxial der Längsachse des Ankermoduls verläuft. Das Verbindungsmodul bildet z.B. ein Zwischenmodul zwischen dem Ankermodul und dem Widerlagermodul. Das Verbindungsmodul oder Verbindungselement kann beispielsweise ein Stangenelement oder dergleichen umfassen.

Bevorzugt ist es, wenn die Verbindungseinrichtung einen Verbindungsstützkörper zur Abstützung an einem Innenumfang der sich zwischen der Widerlagerausnehmung und der Verankerungsausnehmung erstreckenden Verbindungsausnehmung aufweist. Bevorzugt ist es, der wenn der Verbindungsstützkörper sich zumindest abschnittsweise formschlüssig am Innenumfang der Verbindungsausnehmung anlegen kann. Bevorzugt ist es beispielsweise, wenn der Verbindungsstützkörper quer zu seiner Längsachse eine Außenquerschnittskontur mit einer Flachgestalt aufweist, wobei einander gegenüberliegende Flachseiten durch sich zwischen den Flachseiten erstreckenden Schmalseiten verbunden sind.

Der Verbindungsstützkörper weist zweckmäßigerweise zwei oder mehr schalenartige Teilkörper zur Ummantelung eines Zugelements der Verbindungseinrichtung auf. Mithin können also das Zugelement und der Verbindungsstützkörper das vorgenannte Verbindungselement bilden.

Der Verbindungsstützkörper kann aber auch integraler Bestandteil der Verbindungseinrichtung sein, z.B. durch ein Verbindungselement gebildet sein oder an einem Verbindungselement angeordnet sein. Beispielsweise kann der Verbindungsstützkörper an ein Verbindungselement, zum Beispiel einen Zugstab, angeklebt oder angegossen sein.

Der Widerlagerstützkörper und der Ankerstützkörper haben erfindungsgemäß und der Verbindungsstützkörper vorteilhaft im wesentlichen dieselben Querschnittsabmessungen, vorteilhaft auch dieselbe Querschnittsgeometrie. Dementsprechend sind die Flachseiten und die Schmalseiten mindestens eines Paares von Widerlagerstützkörper, Ankerstützkörper und vorteilhaft des Verbindungsstützkörpers jeweils etwa gleich breit. Es ist auch vorteilhaft, wenn die jeweiligen Seiten konturgleich sind. Der Vorteil ist dabei, dass mit einem einzigen Bearbeitungswerkzeug sämtliche Ausnehmungen an den Werkstücken hergestellt werden können, ohne dass das Bearbeitungswerkzeug gewechselt oder neu eingestellt werden muss. Die Ausnehmungen können also dieselben Innenkonturen haben.

Es ist zweckmäßig, wenn die Flachseiten und/oder die Schmalseiten des Widerlagerstützkörpers und/oder des Ankerstützkörpers und/oder des Verbindungsstützkörpers parallel zur jeweiligen Längsachse des jeweiligen Stützkörpers verlaufen.

Die Widerlagerausnehmung und/oder die Verankerungsausnehmung und/oder die Verbindungsausnehmung sind zweckmäßigerweise langlochartig ausgestaltet.

Der Widerlagerstützkörper und/oder der Ankerstützkörper und/oder der Verbindungsstützkörper sind vorzugsweise in langlochartig ausgestaltete Ausnehmungen formschlüssig einbringbar. Die Querschnittskonturen des Widerlagerstützkörpers und/oder des Ankerstützkörper und/oder des Verbindungsstützkörpers sind vorzugsweise zu einem langlochartigen Innenquerschnitt der zugeordneten Ausnehmung passend.

An dieser Stelle sei bemerkt, dass die Flachseiten und die Schmalseiten Planflächen sein können. Es ist aber auch möglich, dass an den Schmalseiten und/oder den Flachseiten Rippen oder dergleichen andere Stützstrukturen vorgesehen sind. Mit anderen Worten kann also die Stützfläche, mit denen sich die jeweiligen Stützkörper (Widerlagerstützkörper, Ankerstützkörper oder Verbindungsstützkörper), am Innenumfang der zugeordneten Ausnehmung (Widerlagerausnehmung, Verankerungsausnehmung oder Verbindungsausnehmung) abstützen, Unterbrechungen oder Aussparungen haben. Zueinander beabstandete Stützkonturen, beispielsweise Rippen, geriffelte Flächen oder dergleichen, des jeweiligen Stützkörpers können also insgesamt eine Flachseite bilden.

Bevorzugt ist eine runde Gestalt der Schmalseiten, d.h. dass sich zwischen den Flachseiten Rundungen erstrecken.

Bevorzugt ist es, wenn eine Längslänge einer Flachseite zwischen den Schmalseiten etwa doppelt so breit ist wie ein Abstand zwischen den Flachseiten.

Bevorzugt ist es, wenn eine jeweilige Flachseite quer zu der Spannachse verläuft und/oder die Flachseite von der Spannachse durchsetzt ist.

In Bezug auf eine einfache Montage ist es vorteilhaft, wenn Komponenten des Verbindungsbeschlags miteinander verschraubbar sind. So kann beispielsweise ein Zuganker der Verbindungseinrichtung sich zwischen dem Ankermodul und dem Widerlagermodul erstrecken und in die beiden Komponenten oder eine davon eingeschraubt sein.

Weiterhin ist es vorteilhaft, wenn Komponenten des Verbindungsbeschlags anhand einer Bajonettverriegelung miteinander verbunden oder verbindbar sind. Eine zweckmäßige Ausführungsform der Erfindung sieht vor, dass die Verbindungseinrichtung mindestens eine Bajonettverriegelung aufweist, die durch eine Drehbewegung von weniger als 200°, beispielsweise etwa 100° oder 80°, vorzugsweise etwa 90°, in eine Verriegelungsstellung bringbar ist, in welcher die Verbindungsmittel die jeweiligen Komponenten, beispielsweise das Ankermodul mit dem Widerlagermodul oder ein Verbindungselement mit dem Ankermodul oder dem Widerlagermodul, in Bezug auf eine Zugachse zugfest miteinander verbindet. Der Bediener muss also die beiden Komponenten nur um einen kurzen Weg relativ zueinander verdrehen, um die Verriegelung herzustellen. Bei der Zugachse handelt es sich vorzugsweise um die Spannachse.

Eine bevorzugte Ausführungsform sieht vor, dass im Bereich der Bajonettverriegelung noch Rastmittel zur Verrastung der Bajonettverriegelung in der Verriegelungsstellung befinden. Somit rastet die Bajonettverriegelung sozusagen in der Verriegelungsstellung ein. Eine Drehposition der miteinander durch die Bajonettverriegelung verbundenen Komponenten ist aufgrund der Verrastung zuverlässiger.

Weiterhin ist es vorteilhaft, wenn die Bajonettverriegelung in der Verriegelungsstellung eine definierte Drehposition einnimmt. Bevorzugt ist in diesem Zusammenhang, dass die Bajonettverriegelung einen Drehanschlag für die Verriegelungsstellung aufweist.

Bevorzugt ist es, wenn sich neben der Bajonettverriegelung oder an der Bajonettverriegelung Stützflächen zum Abstützen der durch die Bajonettverriegelung miteinander verbundenen Komponenten quer zu der Zugachse erstrecken. Die Stützflächen liegen im verriegelten Zustand aneinander an und sorgen somit für eine Abstützung quer zu der Zugachse, beispielsweise quer zur Längsachse des Ankermoduls.

Die Verbindungseinrichtung weist zweckmäßigerweise zwei oder weitere Verbindungselemente auf, die zur Einstellung eines Abstands zwischen dem Widerlagermodul und dem Ankermodul in mindestens zwei voneinander verschiedenen Längspositionen relativ zueinander miteinander verbindbar sind. Beispielsweise sind Verzahnungen vorgesehen, die in den jeweiligen Längspositionen ineinander eingreifen. Bevorzugt ist es, wenn die Verbindungselemente insgesamt eine Außenkontur haben, die konturgleich und/oder in Bezug auf die Abmessungen bzw. den Außenumfang ihres von ihrer jeweiligen Längsachse durchsetzen Querschnitts konturgleich mit den Außenkonturen des Ankermoduls oder des Widerlagermoduls ist.

Die Spannmittel können beispielsweise Spannschrägen an einem Verbindungselement der Verbindungseinrichtung sowie einem zugeordneten Spannkörper, beispielsweise einem Spannbolzen oder dergleichen, umfassen.

Bevorzugt ist ein Spannriegel vorgesehen. Der Spannriegel umfasst zweckmäßigerweise eine Spannschräge, die in eine Spannkulisse eingreift. Bevorzugt ist ein Verbindungselement der Verbindungseinrichtung mit Spannkulissen oder Spannschrägen an einander entgegengesetzten Seitenflächen, insbesondere im Bereich seiner Flachseiten, ausgestattet. Die Spannkulisse ist zweckmäßigerweise achssymmetrisch ausgestaltet. Somit ist es möglich, in beispielsweise um 180° zueinander verdrehten Drehwinkelpositionen jeweils den Spannriegel in Eingriff mit einer der beiden Spannkulissen zu bringen.

Dem Spannriegel liegt zweckmäßigerweise noch ein Stützarm gegenüber, so dass die jeweils zu spannende Komponente, zum Beispiel ein Verbindungselement, sandwichartig zwischen dem Stützarm und dem Spannriegel zu liegen kommt. Somit wird also das Verbindungselement dem Spannriegel gegenüberliegend vom Stützarm gestützt. Am Stützarm sind zweckmäßigerweise keine in Richtung der vorgenannten Spannkulisse vorstehenden Komponenten vorgesehen.

Das Ankermodul kann ein Kopfmodul umfassen, dessen Längsachse und dessen Flachseiten oder Schmalseiten quer zur Spannachse verlaufen. Das Ankermodul kann also genau gleich orientiert sein wie das Widerlagermodul. Die Längsachsen von Kopfmodul und Widerlagermodul oder die Längsachsen von Ankermodul und Widerlagermodul können also beide quer zur Spannachse verlaufen. Bevorzugt sind die vorgenannten Längsachsen parallel zueinander.

Das Kopfmodul ist zweckmäßigerweise baugleich mit dem Widerlagermodul. Somit können also im Wesentlichen dieselben Komponenten verwendet werden.

Das Ankermodul kann einteilig oder mehrteilig sein. Beispielsweise umfasst das Ankermodul ein Kopfmodul und einen Verbindungskörper zur Anordnung in der Verankerungsausnehmung. Es ist beispielsweise möglich, dass der Verbindungskörper von einem oder beiden der vorgenannten Verbindungselemente gebildet ist, die in Bezug auf ihre Längsachse in unterschiedlichen Längspositionen miteinander verbindbar sind.

Das Kopfmodul und der Verbindungskörper haben zueinander winkelige, beispielsweise rechtwinkelige, Längsachsen. Eine Ausnehmung für das Kopfmodul, also eine Kopfmodul-Ausnehmung und die Verankerungsausnehmung haben dementsprechend ebenfalls zueinander winkelige Längsachsen.

Die Längsachse der Kopfmodul-Ausnehmung verläuft vorzugsweise quer zu der Spannachse. Somit stützt sich also auch das Kopfmodul ähnlich wie das Widerlagermodul quer zur Spannachse mit einer Flachseite oder einer Schmalseite an der zugeordneten Ausnehmung, also der Kopfmodul-Ausnehmung, ab.

Eine vorteilhafte Konfiguration ist so getroffen, dass die Längsachsen der Verankerungsausnehmung und der Verbindungsausnehmung miteinander fluchten, während die Längsachsen der für das Kopfmodul vorgesehenen Ausnehmung und der Widerlagerausnehmung dazu quer verlaufen. Die beiden letztgenannten Längsachsen sind zweckmäßigerweise parallel zueinander. Es besteht aber auch die Möglichkeit, dass diese Längsachsen eine Schrägneigung relativ zueinander haben.

Nachfolgend werden Ausführungsbeispiele der Erfindung anhand der Zeichnung erläutert. Es zeigen:
- Figur 1: eine perspektivische Schrägansicht eines Verbindungsbeschlags von schräg oben als Explosionsdarstellung,
- Figur 2: den Verbindungsbeschlag gemäß Figur 1 von schräg unten,
- Figur 3: den Verbindungsbeschlag gemäß der vorstehenden Figuren im montierten Zustand,
- Figur 4: eine Querschnittsansicht durch den Verbindungsbeschlag gemäß Figur 3 entsprechend einer Schnittlinie A-A in Figur 3,
- Figur 5: den Verbindungsbeschlag im montierten Zustand, in welcher er Werkstücke miteinander verbindet, sowie eine Bearbeitungsmaschinen zur Herstellung von Ausnehmungen für den Verbindungsbeschlag in den Werkstücken,
- Figur 6: einen Verbindungsbeschlag, bei dem ein Widerlagermodul gleichzeitig ein Ankermodul oder einen Teil davon bildet,
- Figur 7: ein Verbindungselement des Verbindungsbeschlags gemäß Figur 6,
- Figur 8: eine Querschnittsansicht durch den Verbindungsbeschlag gemäß Figur 6, etwa entlang einer Schnittlinie B-B, jedoch im montierten Zustand,
- Figur 9: den Verbindungsbeschlag gemäß der Figuren 6 und 7 perspektivisch schräg von oben ,
- Figur 10: eine perspektivische Explosionsdarstellung eines weiteren Verbindungsbeschlags, der in
- Figur 11: frontal von oben dargestellt ist,
- Figur 12: eine perspektivische Schrägansicht eines Ankermoduls, in welches in
- Figur 13: ein Betätigungskörper eingesteckt ist,
- Figur 14: eine Alternative zu dem Betätigungskörper gemäß Figur 13,
- Figur 15: den Verbindungsbeschlag gemäß Figuren 10-13 in einem montierten Zustand, in welchem er Werkstücke miteinander verbindet,
- Figur 16: eine Draufsicht auf ein Widerlagermodul des Verbindungsbeschlags gemäß Figuren 10, 11,
- Figur 17: einen weiteren Verbindungsbeschlag von schräg unten mit Komponenten des Verbindungsbeschlags gemäß Figuren 10, 11, der jedoch eine längenverstellbare Verbindungseinrichtung aufweist,
- Figur 18: den Verbindungsbeschlag gemäß Figur 17 schräg oben,
- Figur 19: Komponenten der längenverstellbaren Verbindungseinrichtung des Verbindungsbeschlags gemäß Figuren 17, 18 und
- Figur 20: den Verbindungsbeschlag gemäß Figuren 17, 18 im montierten Zustand, in welchem er drei Werkstücke miteinander verbindet.

Bei den nachfolgenden Ausführungsbeispielen sind teilweise gleiche oder gleichartige Komponenten dargestellt. Diese sind soweit möglich mit denselben Bezugsziffern versehen.

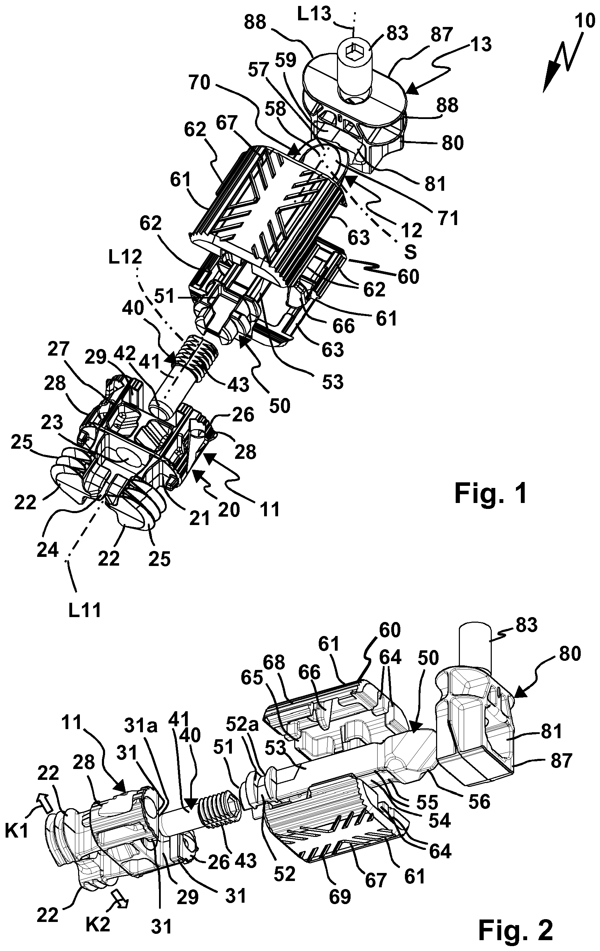

Ein Verbindungsbeschlag 10 gemäß Figuren 1-5 weist ein Ankermodul 11, ein Verbindungsmodul 12 sowie ein Widerlagermodul 13 auf. Das Ankermodul 11 ist zur Anordnung in einer Verankerungsausnehmung 211 eines Werkstücks 200 vorgesehen, während sich das Verbindungsmodul 12 im montierten Zustand in einer Verbindungsausnehmung 212 und das Ankermodul 13 in einer Verankerungsausnehmung 213 befinden.

Das Ankermodul 11 weist einen Ankerstützkörper 20 auf, von dessen Stirnseite 21 Klemmkörper 22 abstehen. Die Klemmkörper 22 und der Ankerstützkörper 20 weisen im Wesentlichen dieselbe Außenumfangskontur quer zu einer Längsachse L11 des Ankermoduls 11 auf. Die beiden Klemmkörper 22 befinden sich auf einander entgegengesetzten Seiten der Längsachse L11. Entlang der Längsachse L11 erstreckt sich zudem noch eine Durchtrittsöffnung 23 für einen Betätigungskörper 40.

Der Betätigungskörper 40 umfasst einen Betätigungsvorsprung 41, an dessen Stirnseite eine Betätigungsschräge 42 vorgesehen ist, beispielsweise eine konische Schräge. Anhand eines Schraubabschnitts 43 ist der Betätigungskörper 40 in die Durchtrittsöffnung 23 einschraubbar, wodurch die Betätigungsschräge 42 in eine Ausnehmung 24 zwischen den Klemmkörpern 22 eindringt und diese in Richtung von Pfeilen K1 und K2 (Figur 2) auseinander spreizt. Dadurch verklemmt sich das Ankermodul 11 in der Verankerungsausnehmung 211. Zudem werden Formschlussvorsprünge 25, z.B. Rippen, in den Innenumfang der Verankerungsausnehmung 211 sozusagen hineingedrückt, um so einen Formschluss zwischen Ankermodul 11 und Verankerungsausnehmung 211 herzustellen.

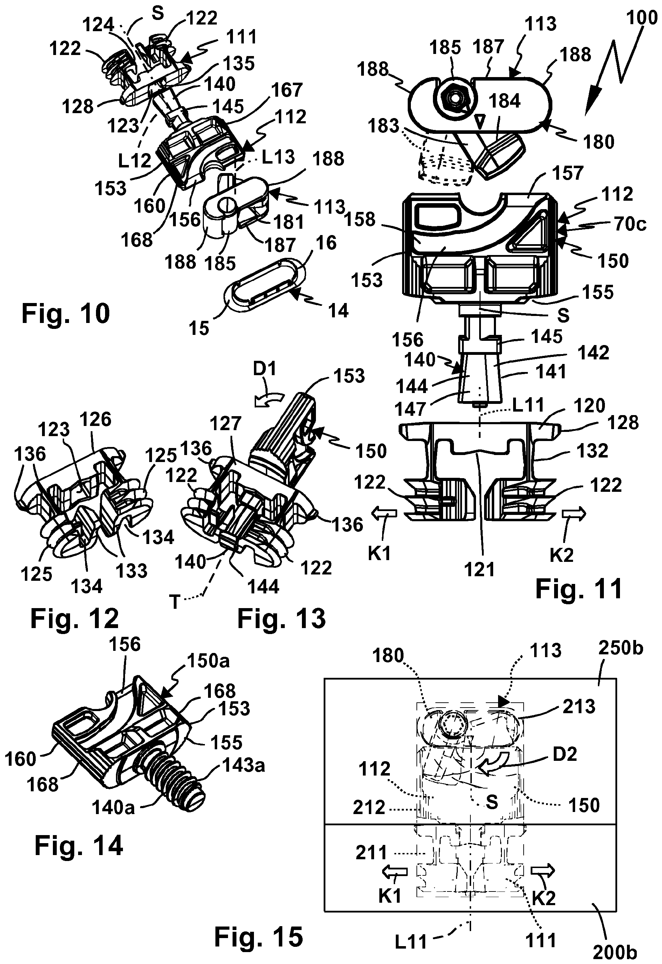

Eine zu der Stirnseite 21 entgegengesetzte Stirnseite 26 des Ankermoduls 11 steht zweckmäßigerweise nicht vor eine Stirnseite 201 des Werkstücks 200 vor, wenn das Ankermodul 11 in der Verankerungsausnehmung 211 aufgenommen ist. Das Ankermodul 11 kann über eine in Figur 11 nur schematisch angedeutete Einstecköffnung 214 in die als Sackloch ausgestaltet Verankerungsausnehmung 211 eingesteckt werden.

Das Ankermodul 11 weist einander entgegengesetzte Flachseiten 27 sowie gerundete Schmalseiten 28 auf. Die Flachseiten 27 und die Schmalseiten 28 liegen im Wesentlichen formschlüssig an dem Innenumfang der Verankerungsausnehmung 211 an. Auch die Formschlussvorsprünge 25 weisen an ihrem Außenumfang, der in Kontakt mit dem Innenumfang der Verankerungsausnehmung 211 gelangt, die runde Kontur der Schmalseiten 28 bzw. die Kontur der Flachseiten 27 auf, sodass jedenfalls das Ankermodul 11, wenn die Klemmkörper 22 noch nicht voneinander weg gespreizt sind, leicht in die Einstecköffnung 214 eingesteckt werden kann.

Dann wird der Betätigungskörper 40 in die Durchtrittsöffnung 23 eingeschraubt, wodurch sich die Klemmarme oder Klemmkörper 22 am Innenumfang der Verankerungsausnehmung 211 verklemmen. Die Rippen oder Formschlussvorsprünge 25 krallen sich dann sozusagen in den Innenumfang der Verankerungsausnehmung 211 hinein, sodass das Ankermodul 11 in der Verankerungsausnehmung 211 formschlüssig und fest gehalten ist. Dann können die weiteren Komponenten des Verbindungsbeschlags 10 bequem montiert werden.

An der Stirnseite 26 befindet sich eine Halteaufnahme 29, die als eine Art Bajonetthalterung ausgestaltet ist. In die Halteaufnahme 29 kann ein Verbindungselement 50 des Verbindungsmoduls 12 eingesteckt und formschlüssig festgelegt werden. Die Halteaufnahme 29 weist eine Einstecköffnung 30 auf, in die ein Steckvorsprung 51 des Verbindungselements 50 eingesteckt werden kann. An der Einstecköffnung 30 sind klammerartige Haltevorsprünge 31 vorgesehen, die in eine Haltenut 52 am Steckvorsprung 51 des Verbindungselements 50 eingreifen können. Die Haltevorsprünge 31 können die Funktion von Bajonett-Vorsprüngen oder Klammern haben, die in die entsprechend als Bajonett-Gegenkontur ausgestaltete Haltenut 52 eingreifen.

Durch eine einfache Steck-Drehbewegung, mit der der Steckvorsprung 51 in die Halteaufnahme 29 eingesteckt und anschließend verdreht, vorzugsweise um etwa 90° verdreht wird, ist ein formschlüssiger Halt des Verbindungselements 50 am Ankermodul 11 herstellbar.

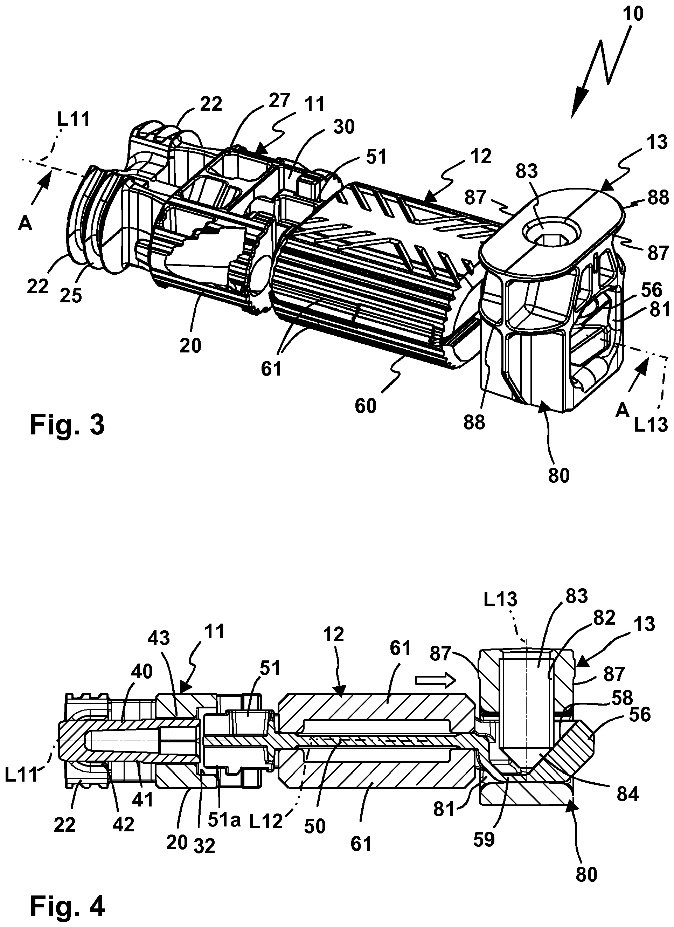

Vorzugsweise ist zudem noch ein Drehanschlag an der Halteaufnahme 29 vorgesehen, der die Drehbewegung des Verbindungselements 50 begrenzt. Dies hat den Vorteil, dass die Drehwinkelposition des Verbindungselements 50 relativ zum Ankermodul 11 durch eine einfache Drehbewegung aufzufinden ist, sodass das Verbindungselement 50 mit dem Ankermodul 11 wie in Figur 3 dargestellt im montierten Zustand fluchtet.

Die definierte Drehwinkelposition ist insofern vorteilhaft, als dass Verbindungsmodul 12 nicht nur das stangenartige Verbindungselement 50 umfasst, sondern auch noch einen Verbindungsstützkörper 60 zur formschlüssigen Aufnahme in der Verbindungsausnehmung 212.

Eine Querabstützung quer zu den Längsachsen L11, L12 bewirkt beispielsweise die Bajonett-Verriegelung anhand der Haltevorsprünge 31 und der die Haltenut 52 begrenzenden Haltevorsprünge, deren einander zugewandte Innenseiten Stützflächen 52a aufweisen, die auf entgegengesetzten Flachseiten der Haltevorsprünge 31 zu liegen kommen, die sozusagen komplementäre Stützflächen 31a bereitstellen.

Ein Stützabschnitt 51a vorn am freien Endbereich des Steckvorsprung 51 taucht vorteilhaft noch in einem Bereich 32 der Durchtrittsöffnung 23 ein, was dazu dienen kann, dass eine Abstützung des Verbindungselements 50 am Ankerstützkörper 20 nicht nur in Richtung der Längsachsen L11, L12, sondern auch in mindestens einer, vorzugsweise in allen Richtungen quer dazu erzielt ist.

Der Verbindungsstützkörper 60 ist an einem Stangenabschnitt 53 des Verbindungselements 50 angeordnet. Der Verbindungsstützkörper 60 umfasst Teilkörper 61, die anhand beispielsweise einer Rastverbindung miteinander verbindbar sind. Beispielsweise sind Rastvorsprünge 62 vorgesehen, die in Rastaufnahmen 63 am jeweils anderen Teilkörper 60 eingreifen. Die Rastvorsprünge 62 und die Rastaufnahmen 63 sind beispielsweise an Längsseiten der Teilkörper 61 vorgesehen. Die Längsseiten sind vorzugsweise parallel zur Längsachse L12.

Weiterhin sind vorteilhaft an einem jeweiligen Teilkörper 61 Stützvorsprünge 66 vorgesehen, die in korrespondierende Aufnahmen am jeweils anderen Teilkörper 61 eingreifen.

Die Teilkörper 61 hausen den Stangenabschnitt 53 ein. Beispielsweise hat der Stangenabschnitt 53 an Längsseiten 54 Halterippen 55, die in Nuten oder sonstige Halteaufnahmen 64 der Teilkörper 61 eingreifen. Bevorzugt hat der Stangenabschnitt 53 des Verbindungselements 50 eine polygonale Gestalt.

Jedenfalls ist es vorteilhaft, wenn bei einem erfindungsgemäßen Verbindungsbeschlag der Verbindungsstützkörper an einem jeweiligen Verbindungselement verdrehsicher aufgenommen ist. Dies ist im Ausführungsbeispiel anhand der polygonalen Ausgestaltung des Stangenabschnitts 53 und/oder anhand der Halterippen 55 gewährleistet, die jeweils formschlüssig in eine Durchtrittsöffnung 65 des Verbindungsstützkörpers 60 eingreifen.

Somit sind Flachseiten 67 und Schmalseiten 68 des Verbindungsstützkörpers 60 und somit des Verbindungsmoduls 12 drehwinkelrichtig zu den Flachseiten 27 und den Schmalseiten 28 des Ankermoduls 11 orientiert, wenn das Verbindungsmodul 12 am Ankermodul 11 befestigt ist.

Die Flachseiten 67 und die Schmalseiten 68 sind zur formschlüssigen Anlage am Innenumfang der Verbindungsausnehmung 212 vorgesehen.

Der Halt des Verbindungsstützkörper 60 in der Verbindungsausnehmung 212 kann vorteilhaft noch verbessert werden, indem beispielsweise eine Rippenstruktur 69 an den Flachseiten 67 und/oder den Schmalseiten 68 vorhanden ist.

Vorteilhaft hat der Verbindungstützkörper 60 die Gestalt eines Dübels für die Verbindungsausnehmung 212.

Es versteht sich, dass alternativ zu dem schalenartigen Verbindungstützkörper 60 beispielsweise auch ein direkt an das Verbindungselement 50 angespritzter Stützkörper vorgesehen sein kann. Weiterhin ist es möglich, dass das Verbindungselement 50 als solches bei einer entsprechend alternativen Ausgestaltung, beispielsweise einer entsprechenden Verdickung im mittleren Bereich, sozusagen integral einen Verbindungsstützkörper ausbildet, der die Funktionalität des Verbindungstützkörpers 60 ohne weiteres erfüllt.

Eine Längserstreckungsachse oder Längsachse L12 des Verbindungsmoduls 12 und des Ankermoduls 11 fluchten zueinander, sind vorliegend zueinander sogar koaxial, wenn das Verbindungsmodul 12 am Ankermodul 11 befestigt ist.

Das Verbindungsmodul 50 bildet einen Bestandteil einer Verbindungseinrichtung 70 zur Verbindung des Ankermoduls 11 mit dem Widerlagermodul 13.

Am einen Längsendbereich des Verbindungselements 50 ist der Steckvorsprung 51, am entgegengesetzten Längsendbereich ein Haltekörper 56 vorgesehen. Der Haltekörper 56 hat beispielsweise eine löffelartige Gestalt.

Der Haltekörper 56 hat eine Aufnahme 57, an deren Innenseite eine Schrägfläche 58 vorgesehen ist. Ein Boden 59 der Aufnahme 57 dient zur Abstützung am Widerlagermodul 13.

Das Widerlagermodul 13 weist einen Widerlagerstützkörper 80 auf, an dem eine Aufnahme 81 für den Haltekörper 56 vorgesehen ist. Der Haltekörper 56 des Verbindungselements 50 kann in die Aufnahme 81 eingesteckt werden. Der Widerlagerstützkörper 80 weist zudem noch eine Aufnahme 82 für einen Spannkörper 83 auf. Der Spannkörper 83, beispielsweise ein Bolzenelement oder dergleichen, ist in die Aufnahme 81 einschraubbar. An einer Stirnseite des Spannkörpers 83 befindet sich eine Spannschräge 84, beispielsweise eine konische Schräge, die an der Schrägfläche 58 des Haltekörpers 56 entlang gleiten kann und auf diesem Wege den Haltekörper 56 in die Aufnahme 81 einzieht. Ein Boden 85 der Aufnahme 81 dient zur Abstützung des Bodens 59 des Haltekörpers 56.

Die Spannschräge 84 und die Schrägfläche 58 bilden Bestandteile von Spannmitteln 71 der Verbindungseinrichtung 70.

Wenn also die Schraube oder der Spannkörper 83 in Richtung der Spannstellung verstellt wird, also in die Aufnahme 81 eingedreht wird, zieht er das Verbindungselement 50 in Richtung des Widerlagermoduls 13 in Richtung einer Spannachse S, wodurch gleichzeitig das Ankermodul 11 in Richtung des Widerlagermoduls 13 gespannt wird. Auf diesem Wege wird eine Stirnseite 201 des Werkstücks 200 gegen eine Stirnseite 251 des Werkstücks 250 gespannt.

Eine Flachseite 87 des Widerlagerstützkörpers 80 stützt sich dabei an einer zugeordneten Flachseite der Widerlagerausnehmung 213 ab. Bezüglich der Spannachse S ist also der Widerlagerstützkörper 80 optimal am zweiten Werkstück 250 abgestützt.

Die Spannachse S entspricht vorliegend den Längsachsen L11 und L12. Sie verläuft winkelig, beispielsweise rechtwinkelig, zur Längsachse L13 des Widerlagermoduls 13.

Eine Längsachse des Spannkörpers 83 verläuft entlang einer Längsachse L13 des Widerlagermoduls 13 oder parallel dazu. Eine Längsachse des Spannkörpers 83 entspricht zweckmäßigerweise der Längsachse L13. Die Längsachse L13 entspricht gleichzeitig der Längsachse der Widerlagerausnehmung 213. Die Längsachse L13 verläuft jedoch winkelig zu den Längsachsen L11, L12 und somit winkelig zu den Längsachsen der Verankerungsausnehmung 211 und der Verbindungsausnehmung 212 und zur Spannachse S.

Schmalseiten 88 zwischen den Flachseiten 87 des Widerlagerstützkörpers 80 sind vorzugsweise gerundet.

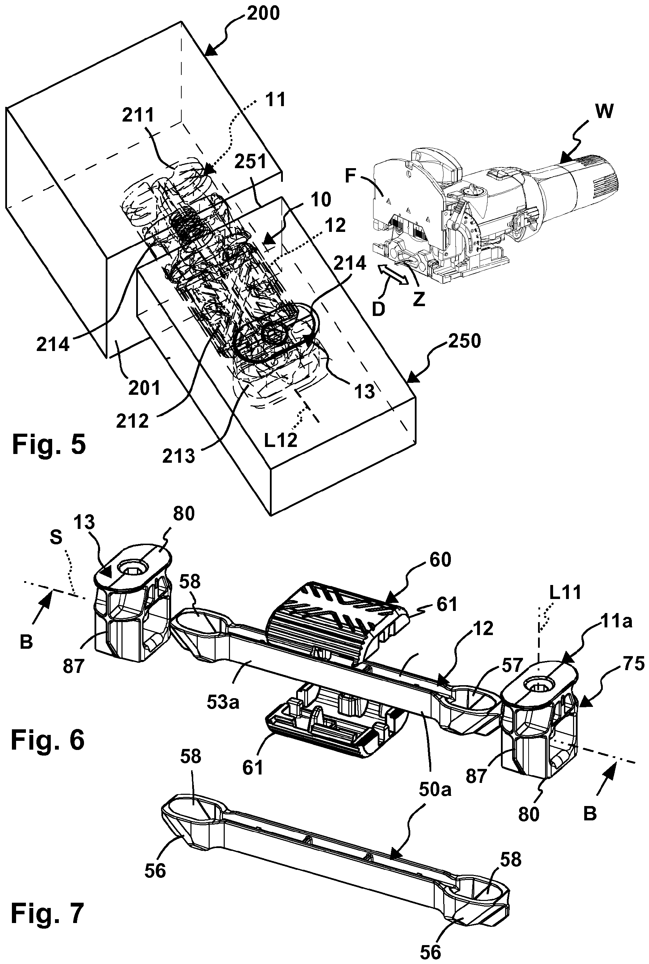

Eine Außenumfangskontur des Widerlagerstützkörpers 80 entspricht vorteilhaft im Wesentlichen der Außenumfangskontur des Ankermoduls 11 und des Verbindungsmoduls 12. Dadurch ist es möglich, mit einem einzigen Bearbeitungswerkzeug Z und einer einzigen Einstellung einer in Figur 5 angedeuteten Werkzeugmaschine W die Verankerungsausnehmung 211, die Verbindungsausnehmung 212 sowie die Widerlagerausnehmung 213 herzustellen.

Eine Anschlagfläche F der Werkzeugmaschine W wird beispielsweise an die Stirnseite 201 des Werkstücks 200 angelegt, sodass das Bearbeitungswerkzeug Z die langlochartige Verankerungsausnehmung 211 in das Werkstück 200 fräsen kann. Dabei pendelt das Bearbeitungswerkzeug Z, beispielsweise ein Fräskopf, entsprechend einem Doppelpfeil D oszillierend hin und her.

Zur Herstellung der Widerlagerausnehmung 213 wird die Anschlagfläche F an die Oberseite 252 des Werkstücks 250 angelegt, das heißt die Widerlagerausnehmung 213 wird von der Oberseite 252 her hergestellt.

Das Verbindungselement 50 kann durch eine an der Stirnseite 251 befindliche, in der Zeichnung nur angedeutete Einstecköffnung eingesteckt werden.

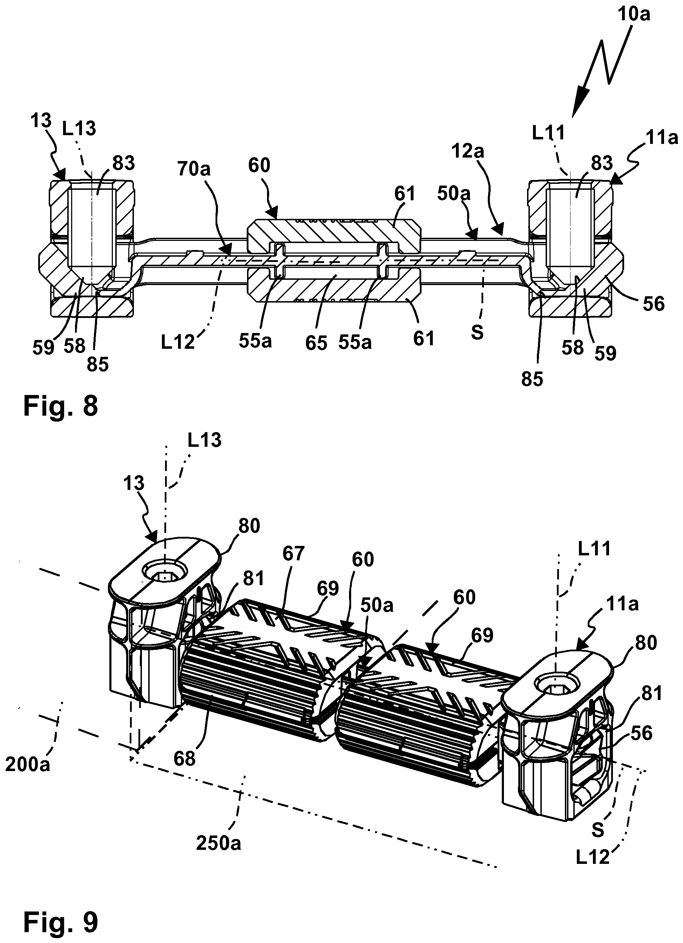

Bei dem in den Figuren 6-9 dargestellten Verbindungsbeschlag 10a sind teilweise gleiche oder ähnliche Komponenten verwendet wie beim Verbindungsbeschlag 10. Anstelle des Verbindungselements 50 kommt ein Verbindungselement 50a zum Einsatz, das an seinen beiden Längsendbereichen jeweils einen Haltekörper 56 aufweist. Die Haltekörper 56 können in eine jeweilige Aufnahme 81 von Widerlagermodulen 13 eingesteckt werden und mit diesen verspannt werden.

Ein Stangenabschnitt 53a des Verbindungselements 50a ist länger als der Stangenabschnitt 53 des Verbindungselements 50, beispielsweise doppelt so lang. Somit ist es möglich, zwei Verbindungsstützkörper 60 am Stangenabschnitt 50a anzubringen. Es ist aber auch möglich, nur einen einzigen Verbindungsstützkörper 60 am Stangenabschnitt 53a anzubringen, wie beispielsweise in Figur 6 dargestellt. Am Stangenabschnitt 53a befinden sich vorteilhaft Halterippen 55a, die in eine Ausnehmung 67 des Verbindungsstützkörpers 60 eingreifen und an den jeweiligen Längsendbereichen der Ausnehmung 67 anschlagen. Somit ist der Verbindungsstützkörper 60 in Bezug auf die Längsachse L12 mit wenig Spiel oder ohne Spiel ortsfest am Stangenabschnitt 53a festgelegt.

Als ein Verankerungsmodul 11a, in diesem Fall als ein Kopfmodul 75, und als Widerlagermodul 13 dienen beim Verbindungsbeschlag 10a jeweils ein Widerlagerstützkörper 80. Somit kann das Verbindungselement 50a mit seinen beiden Haltekörpern 56 jeweils in eine der Aufnahme 81 eines Widerlagerstützkörpers 80 eingesteckt und dort verspannt werden. Die Längsachsen L11 und L13 verlaufen winkelig, vorliegend rechtwinkelig zur Längsachse L12 der im Wesentlichen durch das Verbindungselement 50a bereitgestellten Verbindungseinrichtung 70a. Die Längsachse des Verbindungselements 50a bzw. des dadurch gebildeten Verbindungsmoduls 12a bildet zugleich die Spannachse S des Verbindungsbeschlags 10a.

Die Verspannung des Verbindungsbeschlags 10a kann von entgegengesetzten Seiten her erfolgen, nämlich an jedem der Widerlagerstützkörper 80. Wenn nämlich deren Spannkörper 83 in die Aufnahmen 82 eingeschraubt werden, wirken die jeweiligen Spannschrägen 84 auf die Schrägflächen 58 der Haltekörper 56 ein, sodass die Widerlagerstützkörper 80 zueinander hin gespannt werden. Die in der Zeichnung schematisch dargestellten Werkstücke 200a, 250a, in welchen für die Widerlagerstützkörper 80 jeweils eine nicht dargestellte Widerlagerausnehmung und eine Ankerausnehmung vorgesehen ist, werden dadurch mit ihren jeweiligen Stirnseiten zueinander hin bewegt bzw. gespannt.

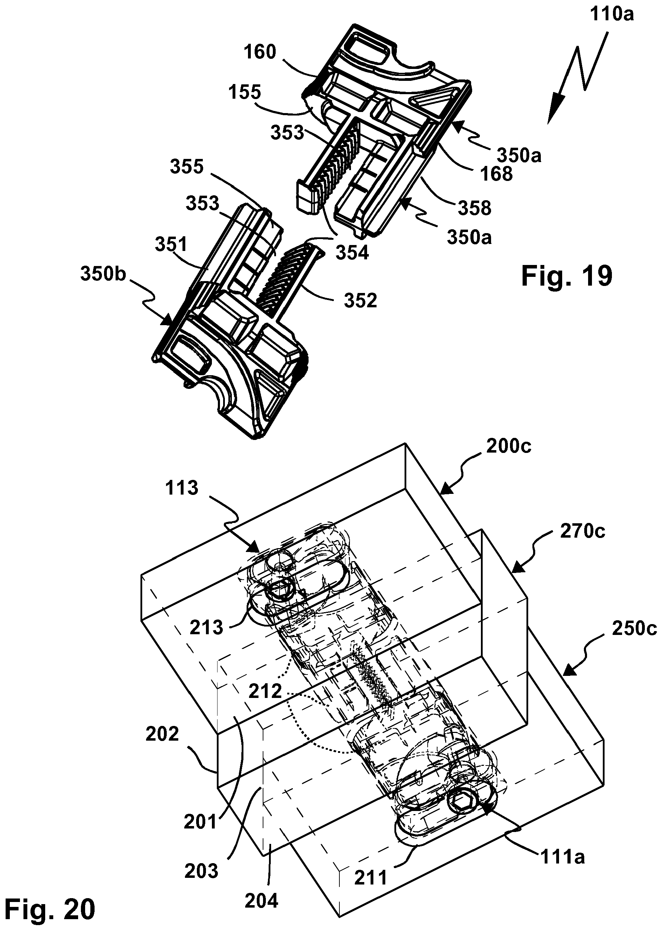

Es versteht sich, dass zwischen den Werkstücken 200a, 250a auch noch ein weiteres Werkstück angeordnet sein kann, in welchem dann eine Verbindungsausnehmung vorgesehen ist, die das Verbindungselement 50a aufnimmt, beispielsweise entsprechend dem Ausführungsbeispiel gemäß Figur 20.

Ferner kann die Verbindungsausnehmung für das Verbindungselement 50a sowohl im ersten Werkstück 200a als auch im zweiten Werkstück 250a vorgesehen sein.

Ein Verbindungsbeschlag 100 gemäß Figuren 10-15 weist ein Ankermodul 111, ein Verbindungsmodul 112 sowie ein Widerlagermodul 113 auf. Das Ankermodul 111 ist beispielsweise in eine Verankerungsausnehmung 211, insbesondere ein Sackloch, eines Werkstücks 200b einbringbar. Mit dem Ankermodul 111 ist das Verbindungsmodul 112 lösbar verbindbar und befindet sich im montierten Zustand in einer Verbindungsausnehmung 212, beispielsweise des Werkstücks 200b oder des Werkstücks 250b. Im Werkstück 250b ist eine Widerlagerausnehmung 213 für das Widerlagermodul 113 vorgesehen.

Das Ankermodul 111 weist einen Ankerstützkörper 120 auf, von dem Klemmkörper 122 in der Art von Klemmarmen abstehen. An den mit der Verankerungsausnehmung 211 in Kontakt tretenden Außenkonturbereichen der Klemmkörper 122 befinden sich Formschlussvorsprünge 125, beispielsweise in der Art von Rippen. Somit kann sich ein jeweiliger Klemmkörper 122 sozusagen in der Verankerungsausnehmung 211 verkrallen, jedenfalls formschlüssig darin halten.

Die Klemmkörper 123 sind von relativ schmalen Armabschnitten 132 gehalten, die von einer Stirnseite 122 des Ankerstützkörpers 120 abstehen. Somit sind die Klemmkörper 122 frei beweglich, sodass sie mit relativ geringer Kraft in Richtung der Klemmstellung, angedeutet durch Pfeile K1 und K2, beweglich sind.

Der Ankerstützkörper 120 weist an einander entgegengesetzten Seiten jeweils eine Flachseite 127 sowie Schmalseiten 128 auf. Die Schmalseiten 128 sind gerundet, während die Flachseiten 127 im Wesentlichen plan sind, sodass sich eine Außenkontur ergibt, die optimal in die langlochartige Verankerungsausnehmung 211 passt.

Zusätzliche Formschlussvorsprünge 136 an beispielsweise den Schmalseiten 128 und/oder den Flachseiten 127 verbessern den formschlüssigen Halt noch zusätzlich.

Zur Betätigung der Klemmkörper 122 in Richtung der Klemmstellung dient ein Betätigungskörper 140. Der Betätigungskörper 140 weist einen Betätigungsvorsprung 141 auf, der zum Einstecken in eine Durchtrittsöffnung oder Einstecköffnung 123 des Ankerstützkörpers 120 entlang einer Steckachse T vorgesehen ist. Der Betätigungskörper 140 bzw. der Betätigungsvorsprung 141 wird zudem zur Betätigung der Klemmkörper 122 bis in eine Ausnehmung 124 zwischen den Klemmkörpern 122 gebracht und dann in Richtung eines Pfeiles D1 (Figur 13) verdreht.

Der Betätigungsvorsprung 141 ist in der Art eines Steckzapfens 147 ausgestaltet.

Der Betätigungsvorsprung 141 kann nur in einer von der Klemmstellung verschiedenen, beispielsweise nur in der in Figur 13 dargestellten Drehwinkelposition oder einer davon etwas abweichenden, jedoch nicht der Klemmstellung entsprechenden Drehwinkelposition relativ zum Ankerstützkörper 120 in die Durchtrittsöffnung 123 eingesteckt werden. An einem Fußbereich des Betätigungsvorsprungs 141 befindet sich eine Außenumfangskontur 145, die in der Steck-Winkelposition gemäß Figur 13 durch eine beispielsweise konturgleiche Innenumfangskontur 135 der Einstecköffnung 123 passt. Wenn jedoch der Betätigungsvorsprung 141 durch die Durchtrittsöffnung 123 durchgesteckt ist und sich zwischen den Klemmkörpern 122 befindet, ist die Außenumfangskontur 145, zum Beispiel eine flach rechteckige Kontur, an der Innenumfangskontur 135 vorbei bewegt. Wenn dann der Betätigungsvorsprung 141 verdreht wird und die Klemmkörper 122 in die Klemmposition gemäß beispielsweise Figur 15 verdrängt hat, sperrt die Innenumfangskontur 135 sozusagen ein Herausziehen des Betätigungsvorsprungs 141 aus der Durchtrittsöffnung 123, weil die Außenumfangskontur 145 nicht mehr durch die Innenumfangskontur 135 hindurch passt.

Es ist beispielsweise eine schlüssellochartige Konstruktion gegeben.

Während beim Einstecken des Betätigungsvorsprung 141 in die Ausnehmung 124 den Klemmkörpern 122 noch Seitenflächen 144 gegenüberliegen, drücken bei der Verdrehung des Betätigungsvorsprung 41 um die Steckachse T im Sinne des Pfeils D1 Betätigungsschrägen 142, beispielsweise Exzenterflächen oder dergleichen, gegen die Klemmkörper 122, sodass diese in ihre Klemmstellung (Pfeile K1 und K2) betätigt oder gedrückt werden.

Alternativ zu den Betätigungsschrägen 142 wäre aber auch eine Verschraubung möglich, ähnlich wie beim Ausführungsbeispiel gemäß Figuren 1-4. Beispielsweise könnte wie beim Ausführungsbeispiel gemäß Figur 14 als Betätigungskörper 140a ein Schraubabschnitt 143a in den Zwischenraum zwischen die Klemmkörper 122 eingeschraubt werden und diese dabei in Richtung der Klemmstellung betätigen.

Die Klemmkörper 122 haben sozusagen eine Knautschzone, die dann wirksam wird, wenn die Klemmkörper 122 nicht mehr weiter in die Klemmstellung betätigbar sind, also beispielsweise am Innenumfang der Verankerungsausnehmung 111 anschlagen, dennoch aber der Betätigungskörper 40 in Richtung seiner Drehstellung, in welcher er sozusagen mit dem Ankerstützkörper 20 bezüglich der Außenkonturen fluchtet, betätigt werden muss. Die Betätigungsschrägen 142 wirken nämlich auf Verformungsabschnitte 133 der Klemmkörper 122, die in der Art von Armen oder dergleichen ausgestaltet sind. Jedenfalls befindet sich zwischen einem Grundkörper eines jeweiligen Klemmkörpers 122 und dem Verformungsabschnitt 133 ein Zwischenraum 134, in welchen sich der Verformungsabschnitt 133 hinein bewegen kann. Somit kann also der Betätigungskörper 30 vollständig in Richtung des Pfeiles D1 verdreht werden, auch wenn ein jeweiliger Klemmkörper 122 nicht mehr ausweichen kann.

Die Betätigungskörper 140, 140a sind an einem Verbindungselement 150 oder einem baugleichen Verbindungselement 150a angeordnet, das zur Verbindung des Ankerstützkörpers 120 mit einem Widerlagerstützkörper 180 des Widerlagermoduls 113 dient. Das Verbindungselement 150 weist beispielsweise einen Verbindungskörper 153 auf. Der Verbindungskörper 153 bildet wie nachfolgend noch erläutert wird gleichzeitig einen Verbindungsstützkörper 160. Vorteilhaft kann der Verbindungskörper 153 als Handhabe zum Verdrehen des Verbindungselements 50 relativ zum Ankermodul 11 genutzt werden. Vom Verbindungskörper 153 oder Verbindungsstützkörper 160 steht der Betätigungskörper 140, also der Betätigungsvorsprung 141, frontal ab.

Der Verbindungsstützkörper 160 hat an seinem Außenumfang Flachseiten 167 sowie Schmalseiten 168, sodass er optimal in die langlochartige Verbindungsausnehmung 212 formschlüssig passt. Verriegelungen, Formschlussvorsprünge oder dergleichen am Verbindungstützkörper 160 sind ohne weiteres möglich und dienen gegebenenfalls zur Verbesserung des Halts in der Verbindungsaufnahme 212.

Der Verbindungsstützkörper 160 und der Ankerstützkörper 120 haben die gleichen Außenabmessungen und die gleiche Außenumfangskontur. In diesem Sinne geometrisch gleichartig ist auch der Widerlagerstützkörper 180 des Widerlagermoduls 113 ausgestaltet. Seine Flachseiten 187 und seine Schmalseiten 188 sind nämlich im gleichen Sinne flach bzw. gerundet wie die Flachseiten 127, 167 bzw. die Schmalseiten 128, 188. Somit passt der Widerlagerstützkörper 180 in die Widerlagerausnehmung 213 optimal formschlüssig, die die gleiche Innenumfangsgeometrie und die gleichen Innenumfangsabmessungen wie die Verankerungsausnehmung 211 und die Verbindungsausnehmung 212 hat. Mithin sind also sämtliche Ausnehmungen 211, 212, 213 in ihrem Querschnitt gleich.

Die Verbindung des Verbindungselements 150 mit dem Widerlagermodul 113 geschieht nun folgendermaßen. Das Widerlagermodul 113 weist einen als Schwenkriegel ausgestalteten Spannkörper 183 auf, der um eine Drehachse D2 (Figur 15) schwenkbar am Widerlagerstützkörper 80 gelagert ist. Beispielsweise durchsetzt eine Welle 185, von der der Spannkörper 83 absteht, das Gehäuse bzw. den Grundkörper des Widerlagerstützkörpers 80. Der Spannkörper 83 kann aus dem Gehäuse bzw. dem Widerlagerstützkörper 80 ausgeschwenkt werden, wobei er dann in eine Spannkulisse 156 des Verbindungselements 150 einschränkt. Die Spannkulisse 156 verläuft von ihrem Eingang 157 bis zu ihrem Endbereich 158 beispielsweise bezüglich einer Spannschräge 184 am Spannkörper 183 exzentrisch. Weiterhin ist es möglich, dass die Spannschräge 184 einen anderen Radius aufweist als die Spannkulisse 156. Somit bewirkt ein Ausschwenken des Spannkörpers 183 eine Verspannung des Verbindungselements 50 in Richtung des Widerlagermoduls 13 und somit auch des mit dem Verbindungselement 50 gekoppelten Ankermoduls 11 in Richtung des Widerlagermoduls 13 in Richtung einer Spannachse S. Die Spannachse S ist koaxial mit der Längsachse L11 des Ankerstützkörpers 120 bzw. Ankermodul 111 und einer Längsachse L12 des Verbindungsmoduls 112. Auf diesem Wege werden auch die Werkstücke 200a und 200b mit ihren Stirnseiten, von denen aus sich die Verankerungsausnehmung 211 und die Verbindungsausnehmung 212 weg erstrecken, aneinander gespannt.

Ein Federelement 181 belastet den Spannkörper 83 im Sinne einer Bewegung in die Spannkulisse 156 hinein oder aus dem Widerlagerstützkörper 180 heraus. Diese Maßnahme trägt dazu bei, dass sich der Widerlagerstützkörper 180 sozusagen von selbst in der Widerlagerausnehmung 213 verspannt.

Am freien Endbereich des Spannkörpers 183 befindet sich ein Betätigungsvorsprung 186, an welchem die Spannschräge 184 vorgesehen ist. Dem Spannkörper 183 gegenüberliegend ist ein Stützarm 189 vorgesehen, der allerdings keine Spannschräge und keinen Betätigungsvorsprung aufweist. An dem Verbindungselement 150 sind an einander entgegengesetzten Flachseiten 167 jeweils Spannkulissen 156 vorgesehen, sodass die Spannschräge 184 in beiden Drehwinkelpositionen des Verbindungselements 150 zum Widerlagermodul 13 jeweils in eine Spannkulisse 156 eingreifen kann. Somit kann das Verbindungselement 150 in um 180° verdrehten Winkelpositionen zwischen den Stützarm 189 und den Spannkörper oder Riegel 183 eingeführt werden. Kann die Spannschräge 184 zusammen mit der Spannkulisse 156, in welche sie eingreift, ein Spannmittel 71 realisieren.

Am Achselement 185 oder am Spannkörper 83 ist beispielsweise eine Sechskant-Ausnehmung oder dergleichen andere Drehmitnahme oder Betätigungsfläche vorgesehen, um den jeweiligen Spannkörper 83, 183 in Richtung der Spannstellung betätigen.

Das Verbindungselement 50 bildet ein Bestandteil einer Verbindungseinrichtung 70c.

Eine jeweilige stirnseitige Öffnung einer Ausnehmung an einem Werkstück ist durch ein in Figur 10 angedeutetes Abdeckelement 14 verschließbar. Von einer Deckwand 15 stehen beispielsweise Haltevorsprünge 16 vor, deren Außenumfangskontur der Innenumfangskontur der jeweils zu verschließenden Öffnung, beispielsweise der Widerlagerausnehmung 213, entspricht. Die Haltevorsprünge 16 sind vorzugsweise nach radial außen, das heißt in Richtung der Innenumfangskontur der zu verschließenden Ausnehmung angefedert.

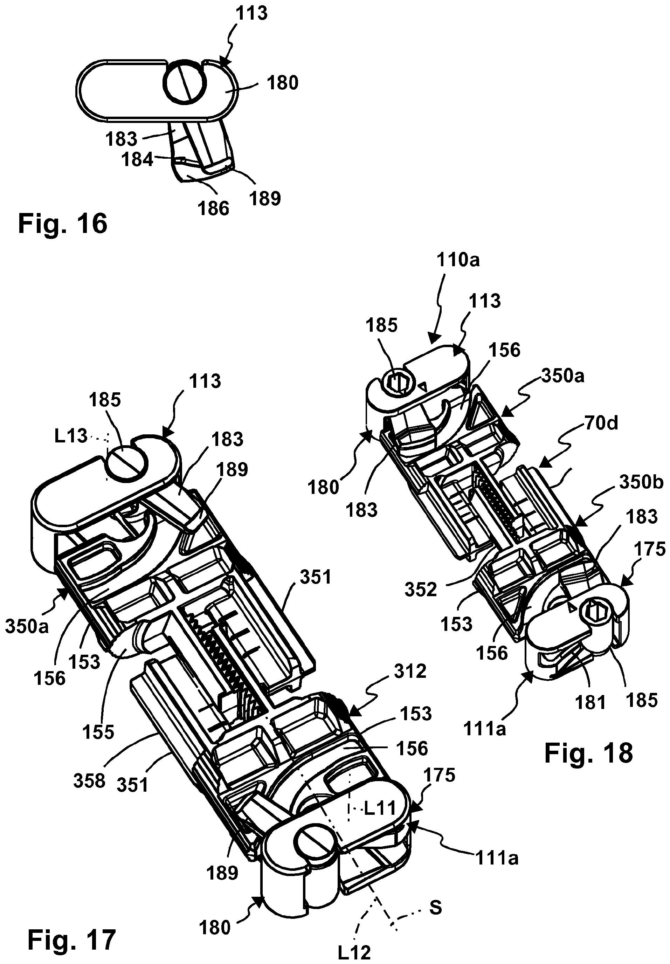

Es ist möglich, Widerlagerstützkörper 180 sowohl als ein Ankermodul 111a, als auch als ein Widerlagermodul 113 zu verwenden, wie beim Ausführungsbeispiel des Verbindungsbeschlags 110a gemäß Figuren 17-20. In Falle des Ankermoduls 111a bildet der Widerlagerstützkörper 180 ein Kopfmodul 175. Funktional entspricht die Anordnung des Verbindungsbeschlags 110a in etwa derjenigen des Verbindungsbeschlags 10a.

Es ist auch möglich, Widerlagermodule 13 anhand einer sozusagen längenverstellbaren Verbindungseinrichtung 70d miteinander zu koppeln.

Die Verbindungseinrichtung 70d umfasst in Bezug auf die Längsachse L12 in unterschiedlichen Längspositionen miteinander verbindbare Verbindungselemente 350a, 350b, die baugleich sind und nachfolgend einheitlich mit 350 bezeichnet sind. Jedes der Verbindungselemente 350 hat einen Verbindungskörper 153 und somit jeweils eine Spannkulisse 156, in welche jeweils der Spannkörper 183 des Widerlagerstützkörpers 180 bzw. des Widerlagermoduls 113 eingreifen kann. Vor eine Stirnseite 155 des Verbindungskörpers 153, der zugleich einen Verbindungsstützkörper bildet, stehen ein Stützarm 351 sowie ein Haltearm 352 vor.

Eine Außenseite des Stützarms 351 bildet zugleich eine Schmalseite 358 des Verbindungselements 350. Die Schmalseite 358 fluchtet mit der Schmalseite 168 des Verbindungsstützkörpers 160.

Zwischen dem Stützarm 351 und dem Haltearm 352 ist ein Zwischenraum 353 vorhanden, in welchen der jeweils andere Haltearm 352 des anderen Verbindungselements 350 eingreifen kann. Durch eine Steckbewegung quer zur Längsachse L12 gelangen Zahnungen 354 an den Haltearmen 352 in Eingriff miteinander, so dass die beiden Verbindungselemente 350 zugfest bezüglich der Längsachse L12 miteinander verbunden sind. Am jeweiligen Haltearm 351 ist beispielsweise eine Stützrippe oder ein Stützvorsprung 355 vorgesehen, der den jeweils eingreifenden Haltearm 352 zuverlässig im Zwischenraum 353 hält.

Mit dem durch die Verbindungseinrichtung 70d und die Widerlagerstützkörper 80 gebildeten Verbindungsbeschlag 110a können beispielsweise Werkstücke 200c, 270c und 250c sandwichartig miteinander gekoppelt und verspannt werden. Dabei werden beispielsweise Stirnseiten 201 und 203 der außenliegenden Werkstücke 200c und 250c gegen Stirnseiten 202, 203 des dazwischenliegenden Werkstücks 270c gespannt. Das Werkstück 270c und die anderen beiden Werkstücke 200c und 250c sind mit Verbindungsausnehmungen 212 versehen, die von der Verbindungseinrichtung 70d durchsetzt ist.

## Patentansprüche

1. Verbindungsbeschlag zur Verbindung eines ersten Werkstücks (200) und eines zweiten Werkstücks, mit einem Ankermodul (11; 111) zur Verankerung des Verbindungsbeschlags (10, 110) in einer Verankerungsausnehmung (211) des ersten Werkstücks (200) und einem Widerlagermodul (13, 113) zur Abstützung in einer Widerlagerausnehmung (213) des zweiten Werkstücks (250), und mit einer Spannmittel (71) aufweisenden Verbindungseinrichtung (70) zur Anordnung in einer mit der Widerlagerausnehmung (213) und der Verankerungsausnehmung (211) kommunizierenden Verbindungsausnehmung in dem ersten und/oder zweiten Werkstück und zum lösbaren Verbinden und Verspannen des Widerlagermoduls (13, 113) mit dem Ankermodul (11; 111) entlang einer Spannachse (S) für eine Verspannung des ersten und des zweiten Werkstücks miteinander, wobei das Ankermodul (11; 111) einen Ankerstützkörper (20; 120) zur Abstützung an einem Innenumfang der Verankerungsausnehmung (211) und das Widerlagermodul (13, 113) einen Widerlagerstützkörper (80; 180) zur Abstützung an einem Innenumfang der Widerlagerausnehmung (213) aufweist, wobei der Ankerstützkörper (20; 120) und der Widerlagerstützkörper (80; 180) am Außenumfang ihres von ihrer jeweiligen Längsachse (L11, L12, L13) durchsetzen Querschnitts eine Flachgestalt mit einander gegenüberliegenden Flachseiten (27, 67, 87) und sich zwischen den Flachseiten (27, 67, 87) erstreckenden insbesondere gerundeten Schmalseiten (28, 68, 88) aufweisen, und wobei im montierten Zustand des Verbindungsbeschlags (10, 110) die Spannachse (S) quer zu mindestens einer der Längsachsen (L11, L12, L13) von Ankermodul (11; 111) oder Widerlagermodul (13, 113) in einem Winkel verläuft, sodass sich der Ankerstützkörper (20; 120) oder der Widerlagerstützkörper (80; 180) mit einer Flachseite (27, 67, 87) oder Schmalseite (28, 68, 88) am Innenumfang der zugeordneten Verankerungsausnehmung (211) oder Widerlagerausnehmung (213) quer zu der Spannachse (S) abstützt, **dadurch gekennzeichnet, dass** der Widerlagerstützkörper (80; 180) und der Ankerstützkörper (20; 120) der Verbindungseinrichtung (70) im wesentlichen dieselben Querschnittsabmessungen aufweisen.

2. Verbindungsbeschlag nach Anspruch 1, **dadurch gekennzeichnet, dass** im montierten Zustand des Verbindungsbeschlags (10, 110) die Längsachsen (L11, L12, L13) des Ankermoduls (11; 111) und des Widerlagermoduls (13, 113) quer zueinander verlaufen und/oder die Spannmittel (71) ausschließlich zwischen der Verbindungseinrichtung (70) und dem zugeordneten Ankerstützkörper (20; 120) oder Widerlagerstützkörper (80; 180) wirken.

3. Verbindungsbeschlag nach Anspruch 1 oder 2, **dadurch gekennzeichnet, dass** die Verbindungseinrichtung (70) derart ausgestaltet ist, dass sie von dem Ankermodul (11; 111) und/oder dem Widerlagermodul (13, 113) entfernbar ist und/oder nicht vor die Verankerungsausnehmung (211) oder die Widerlagerausnehmung (213) oder die Verbindungsausnehmung vorsteht, wenn das Ankermodul (11; 111) in der Verankerungsausnehmung (211) oder das Widerlagermodul (13, 113) der Widerlagerausnehmung (213) aufgenommen sind.

4. Verbindungsbeschlag (10, 110) nach einem der vorhergehenden Ansprüche, **dadurch gekennzeichnet, dass** das Ankermodul (11; 111) mindestens einen Klemmkörper (22; 122), insbesondere mindestens einen Klemmarm, aufweist, welcher durch einen Betätigungskörper (40; 140) aus einer Lösestellung, in welcher das Ankermodul (11; 111) in die Verankerungsausnehmung (211) einführbar ist, in eine Klemmstellung bringbar ist, in welcher der Klemmkörper (22; 122) gegen einen Innenumfang der Verankerungsausnehmung (211) geklemmt ist, wobei vorteilhaft vorgesehen ist, dass das Ankermodul (11; 111) mindestens zwei spreizfußartig durch den Betätigungskörper (40; 140) in die Klemmstellung bringbare Klemmkörper (22; 122), insbesondere Klemmarme oder Spreizarme, aufweist und/oder dass der Betätigungskörper (40; 140) mit dem Ankermodul (11; 111) insbesondere anhand einer Schraubverbindung oder einer Steckzapfen-Verbindung zugfest bezüglich der Längsachse (L11, L12, L13) des Ankermoduls (11; 111) verbindbar ist und zur Verbindung des Ankermoduls (11; 111) mit dem Widerlagermodul (13, 113) ausgestaltet ist.

5. Verbindungsbeschlag nach Anspruch 4, **dadurch gekennzeichnet, dass** der Betätigungskörper (40; 140) einen Steckzapfen (147) aufweist, der in eine Einstecköffnung des Ankermoduls (11; 111) einsteckbar ist und eine Verdrängerfläche, insbesondere eine Exzenterkontur, aufweist, die durch Verdrehung des Betätigungskörpers (40; 140) in dem Ankermodul (11; 111) den mindestens einen Klemmkörper (22; 122) in die Klemmstellung verdrängt.

6. Verbindungsbeschlag nach Anspruch 5, **dadurch gekennzeichnet, dass** der Steckzapfen (147) eine Außenumfangskontur und die Einstecköffnung eine Innenumfangskontur aufweisen, die in einer zum Einstecken des Steckzapfens (147) in die Einstecköffnung vorgesehenen ersten Steck-Winkelposition des Steckzapfens (147) und der Einstecköffnung bezüglich der Steckachse (T) eine Längsbewegung des Betätigungskörpers (40; 140) und des Ankermoduls (11; 111) ermöglichen und in der Klemmstellung zugeordneten und gegenüber der Steck-Winkelposition verdrehten Klemm-Winkelposition den Betätigungskörper (40; 140) zugfest bezüglich der Steckachse (T) oder der Längsachse (L11, L12, L13) am Ankermodul (11; 111) halten.

7. Verbindungsbeschlag nach einem der Ansprüche 4 bis 6, **dadurch gekennzeichnet, dass** an dem Betätigungskörper (40; 140) und/oder an dem Ankermodul (11; 111), insbesondere dem mindestens einen Klemmkörper (22; 122), eine Verformungszone vorgesehen ist, die durch eine Verstellung des Betätigungskörpers (40; 140) in Richtung der Klemmstellung des mindestens einen Klemmkörpers (22; 122) dauerhaft verformbar ist.

8. Verbindungsbeschlag nach einem der vorhergehenden Ansprüche, **dadurch gekennzeichnet, dass** das Ankermodul (11; 111), insbesondere der mindestens eine Klemmkörper (22; 122) oder der Ankerstützkörper (20; 120) des Ankermoduls (11; 111), mindestens einen Formschlussvorsprung (25), insbesondere eine Verrippung oder Zahnstruktur, zur formschlüssigen Verbindung mit der Verankerungsausnehmung (211) und/oder mindestens eine Reibschlussfläche zur reibschlüssigen Verbindung mit der Verankerungsausnehmung (211) und/oder mindestens eine Eindringkontur zum Eindringen in das erste Werkstück (200) aufweist.

9. Verbindungsbeschlag nach einem der vorhergehenden Ansprüche, **dadurch gekennzeichnet, dass** die Verbindungseinrichtung (70) ein insbesondere als Verbindungsmodul (12; 112) ausgestaltetes Verbindungselement (50; 150) zur Anordnung zwischen dem Ankermodul (11; 111) und dem Widerlagermodul (13, 113) umfasst, wobei im montierten Zustand eine Längsachse (L12) des Verbindungsmoduls (12; 112) oder Verbindungselements (50; 150) vorteilhaft parallel oder koaxial mit der Längsachse (L11, L13) des Ankermoduls (11; 111) verläuft.

10. Verbindungsbeschlag nach einem der vorhergehenden Ansprüche, **dadurch gekennzeichnet, dass** die Verbindungseinrichtung (70) einen Verbindungsstützkörper (60; 160) zur Abstützung an einem Innenumfang der sich zwischen der Widerlagerausnehmung (213) und der Verankerungsausnehmung (211) erstreckenden Verbindungsausnehmung aufweist, wobei der Verbindungsstützkörper (60; 160) zweckmäßigerweise am Außenumfang seines von seiner Längsachse (L12) durchsetzen Querschnitts eine Flachgestalt mit einander gegenüberliegenden Flachseiten (67) und sich zwischen den Flachseiten (67) erstreckenden Schmalseiten (68) aufweist, wobei vorteilhaft vorgesehen ist, dass der Verbindungsstützkörper (60; 160) mindestens zwei schalenartige Teilkörper zur Ummantelung eines Zugelements oder Verbindungselements (50) der Verbindungseinrichtung (70) aufweist.

11. Verbindungsbeschlag nach einem der vorhergehenden Ansprüche, **dadurch gekennzeichnet, dass** der Widerlagerstützkörper (80; 180) und/oder der Ankerstützkörper (20; 120) und/oder ein Verbindungsstützkörper (60; 160) der Verbindungseinrichtung (70) im wesentlichen dieselben Querschnittsgeometrien aufweisen und/oder am Außenumfang ihres von ihrer Längsachse (L11, L12, L13) durchsetzten Querschnitts konturgleich sind und/oder dass ein Verbindungsstützkörper (60; 160) der Verbindungseinrichtung (70) im wesentlichen dieselben Querschnittsabmessungen wie der Widerlagerstützkörper (80; 180) und der Ankerstützkörper (20; 120) aufweist.

12. Verbindungsbeschlag nach einem der vorhergehenden Ansprüche, **dadurch gekennzeichnet, dass** die Verbindungseinrichtung (70) mindestens eine Spannschräge (84; 184) oder eine Exzenterkontur oder einen auf eine Spannfläche oder Spannkulisse wirkenden Schwenkriegel (183) zur Verspannung des Widerlagermoduls (13, 113) mit dem Ankermodul (11; 111) aufweist und/oder dass die Verbindungseinrichtung (70) zwei Verbindungselemente (50; 150) aufweist, die zur Einstellung eines Abstands zwischen dem Widerlagermodul (13, 113) und dem Ankermodul (11; 111) in mindestens zwei voneinander verschiedenen Längspositionen relativ zueinander miteinander verbindbar sind.

13. Verbindungsbeschlag nach einem der vorhergehenden Ansprüche, **dadurch gekennzeichnet, dass** die Verbindungseinrichtung (70) mindestens eine Bajonettverriegelung aufweist, die durch eine Drehbewegung von weniger als 200°, vorzugsweise etwa 90°, in eine Verriegelungsstellung bringbar ist, in welcher die Verbindungseinrichtung (70) die jeweiligen Komponenten, insbesondere das Ankermodul (11; 111) mit dem Widerlagermodul (13, 113) oder ein Verbindungselement (50; 150) mit dem Ankermodul (11; 111) oder dem Widerlagermodul (13, 113), in Bezug auf eine Zugachse zugfest miteinander verbindet, wobei vorteilhaft vorgesehen ist, dass neben der Bajonettverriegelung oder an der Bajonettverriegelung Stützflächen zum Abstützen der durch die Bajonettverriegelung miteinander verbundenen Komponenten quer zu der Zugachse vorgesehen sind und/oder dass Rastmittel zur Verrastung der Bajonettverriegelung in der Verriegelungsstellung vorgesehen sind und/oder dass die Bajonettverriegelung einen Drehanschlag für die Verriegelungsstellung aufweist.

14. Verbindungsbeschlag nach einem der vorhergehenden Ansprüche, **dadurch gekennzeichnet, dass** das Ankermodul (11; 111) ein mit dem Widerlagermodul (13, 113) baugleiches Kopfmodul (75; 175) umfasst und/oder dass die Längsachsen (L11, L12) des Ankermoduls (11; 111) und des Widerlagermoduls (13, 113) parallel zueinander sind und/oder dass das Ankermodul (11; 111) ein Kopfmodul (75; 175) und einen Verbindungskörper zur Anordnung in der Verankerungsausnehmung (211) umfasst, wobei Längsachsen (L11, L12, L13) des Kopfmoduls (75; 175) und des Verbindungskörpers zueinander winkelig, insbesondere rechtwinkelig, sind.

15. Verfahren zur Verbindung eines ersten Werkstücks (200) und eines zweiten Werkstücks anhand eines Verbindungsbeschlags (10, 110), mit den Schritten: Verankerung eines Ankermoduls (11; 111) des Verbindungsbeschlags (10, 110) in einer Verankerungsausnehmung (211) des ersten Werkstücks (200)
- Anordnen eines Widerlagermoduls (13, 113) des Verbindungsbeschlags (10, 110) in einer Widerlagerausnehmung (213) des zweiten Werkstücks (250) zur Abstützung an dem zweiten Werkstück (250),
- Anordnung einer Spannmittel (71) aufweisenden Verbindungseinrichtung (70) in einer mit der Widerlagerausnehmung (213) und der Verankerungsausnehmung (211) kommunizierenden Verbindungsausnehmung in dem ersten und/oder zweiten Werkstück zum lösbaren Verbinden und Verspannen des Widerlagermoduls (13, 113) mit dem Ankermodul (11; 111) entlang einer Spannachse (S) für eine Verspannung des ersten und des zweiten Werkstücks miteinander,
wobei das Ankermodul (11; 111) einen Ankerstützkörper (20; 120) zur Abstützung an einem Innenumfang der Verankerungsausnehmung (211) und das Widerlagermodul (13, 113) einen Widerlagerstützkörper (80; 180) zur Abstützung an einem Innenumfang der Widerlagerausnehmung (213) aufweist, wobei der Ankerstützkörper (20; 120) und der Widerlagerstützkörper (80; 180) am Außenumfang ihres von ihrer jeweiligen Längsachse (L11, L12, L13) durchsetzen Querschnitts eine Flachgestalt mit einander gegenüberliegenden Flachseiten (27, 67, 87) und sich zwischen den Flachseiten (27, 67, 87) erstreckenden insbesondere gerundeten Schmalseiten (28, 68, 88) aufweisen, **gekennzeichnet durch**:
- Montieren des Verbindungsbeschlags (10, 110) derart, dass die Spannachse (S) quer zu mindestens einer der Längsachsen (L11, L12, L13) von Ankermodul (11; 111) oder Widerlagermodul (13, 113) in einem Winkel verläuft, sodass sich der Ankerstützkörper (20; 120) oder der Widerlagerstützkörper (80; 180) mit einer Flachseite (27, 67, 87) oder Schmalseite (28, 68, 88) am Innenumfang der zugeordneten Verankerungsausnehmung (211) oder Widerlagerausnehmung (213) quer zu der Spannachse (S) abstützt, wobei der Widerlagerstützkörper (80; 180) und der Ankerstützkörper (20; 120) der Verbindungseinrichtung (70) im wesentlichen dieselben Querschnittsabmessungen aufweisen, so dass die Verankerungsausnehmung (211) an dem ersten Werkstück (200) und die Widerlagerausnehmung (213) an dem zweiten Werkstück (250) mit einem einzigen Bearbeitungswerkzeug hergestellt werden können, ohne dass das Bearbeitungswerkzeug gewechselt oder neu eingestellt werden muss.

## Claims

1. Connecting fitting for connecting a first workpiece (200) and a second workpiece, with an anchor module (11; 111) for anchoring the connecting fitting (10; 110) in an anchoring recess (211) of the first workpiece (200) and an abutment module (13; 113) for support in an abutment recess (213) of the second workpiece (250), and with a connecting device (70) with clamping means (71) for fitting in a connection recess, communicating with the abutment recess (213) and the anchoring recess (211), in the first and/or second workpiece, and for releasable connection and clamping of the abutment module (13; 113) to the anchor module (11; 111) along a clamping axis (S) for clamping together of the first and second workpiece, wherein the anchor module (11; 111) has an anchor support body (20; 120) for support on an inner periphery of the anchoring recess (211), and the abutment module (13; 113) has an abutment support body (80; 180) for support on an inner periphery of the abutment recess (213), wherein the anchor support body (20; 120) and the abutment support body (80; 180) have, on the outer periphery of their cross-section through which their respective longitudinal axis (L11, L12, L13) passes, a flat shape with opposite flat sides (27, 67, 87) and narrow sides (28, 68, 88), in particular rounded, extending between the flat sides (27, 67, 87), and wherein in the assembled state of the connecting fitting (10; 110), the clamping axis (S) runs at an angle transversely to at least one of the longitudinal axes (L11, L12, L13) of anchor module (11; 111) or abutment module (13; 113), so that the anchor support body (20; 120) or the abutment support body (80; 180) rests with a flat side (27, 67, 87) or narrow side (28, 68, 88) on the inner periphery of the assigned anchoring recess (211) or abutment recess (213) transversely to the clamping axis (S), **characterised in that** the abutment support body (80; 180) and the anchor support body (20; 120) of the connecting device (70) have substantially the same cross-sectional dimensions.

2. Connecting fitting according to claim 1, **characterised in that**, in the in the assembled state of the connecting fitting (10; 110), the longitudinal axes (L11, L12, L13) of the anchor module (11; 111) and the abutment module (13; 113) run transversely to one another and/or the clamping means (71) act solely between the connecting device (70) and the assigned anchor support body (20; 120) or abutment support body (80; 180).

3. Connecting fitting according to claim 1 or 2, **characterised in that** the connecting device (70) is so designed that it may be removed from the anchor module (11; 111) and/or the abutment module (13; 113), and/or does not protrude from the anchoring recess (211) or the abutment recess (213) or the connection recess when the anchor module (11; 111) is held in the anchoring recess (211) or the abutment module (13; 113) in the abutment recess (213).

4. Connecting fitting (10; 110) according to any of the preceding claims, **characterised in that** the anchor module (11; 111) has at least one clamping body (22; 122), in particular at least one clamping arm, which may be brought by an actuating body (40; 140) from a release position in which the anchor module (11; 111) may be inserted into the anchoring recess (211), into a clamped position in which the clamping body (22; 122) is clamped against an inner periphery of the anchoring recess (211), wherein it is advantageously provided that the anchor module (11; 111) has at least two splay-foot-like clamping bodies (22; 122), in particular clamping arms or spreading arms, which may be brought into the clamped position by means of the actuating body (40; 140), and/or that the actuating body (40; 140) may be connected to the anchor module (11; 111), in particular with the aid of a screw connection or an insertion pin connection, tension-resistant relative to the longitudinal axis (L11, L12, L13) of the anchor module (11; 111), and is designed for connection of the anchor module (11; 111) to the abutment module (13; 113).

5. Connecting fitting according to claim 4, **characterised in that** the actuating body (40; 140) has an insertion pin (147), which may be inserted into an insertion opening of the anchor module (11; 111) and has a displacing surface, in particular an eccentric contour, which through rotation of the actuating body (40; 140) into the anchor module (11; 111), shifts the clamping body or bodies (22; 122) into the clamped position.

6. Connecting fitting according to claim 5, **characterised in that** the insertion pin (147) has an external peripheral contour and the insertion opening an inner peripheral contour which, in a first insertion angular position of the insertion pin (147) and the insertion opening relative to the insertion axis (T), provided for insertion of the insertion pin (147) into the insertion opening, allows a longitudinal movement of the actuating body (40; 140) and the anchor module (11; 111) and, in the clamping angular position assigned to the clamped position and rotated relative to the insertion angular position, holds the actuating body (40; 140) with tension-resistance relative to the insertion axis (T) or the longitudinal axis (L11, L12, L13) of the anchor module (11; 111).

7. Connecting fitting according to any of claims 4 to 6, **characterised in that**, on the actuating body (40; 140) and/or the anchor module (11; 111), in particular the clamping body or bodies (22; 122), there is provided a deformation zone which may be permanently deformed by movement of the actuating body (40; 140) in the direction of the clamped position of the clamping body or bodies (22; 122).

8. Connecting fitting according to any of the preceding claims, **characterised in that** the anchor module (11; 111), in particular the clamping body or bodies (22; 122) or the anchor support body (20; 120) of the anchor module (11; 111), has at least one form-fitting projection (25), in particular ribbing or a tooth structure, for form-fitting connection with the anchoring recess (211), and/or at least one frictional connection face for frictional connection with the anchoring recess (211), and/or at least one penetrating contour for penetration of the first workpiece (200).

9. Connecting fitting according to any of the preceding claims, **characterised in that** the connecting device (70) includes a connecting element (50; 150), in particular in the form of a connection module (12; 112), for arrangement between the anchor module (11; 111) and the abutment module (13; 113) wherein, in the assembled state, a longitudinal axis (L12) of the connection module (12; 112) or connecting element (50; 150) runs advantageously parallel or coaxial to the longitudinal axis (L11, L13) of the anchor module (11; 111).

10. Connecting fitting according to any of the preceding claims, **characterised in that** the connecting device (70) has a connection support body (60; 160) for support at an inner periphery of the connection recess extending between the abutment recess (213) and the anchoring recess (211), wherein the connection support body (60; 160) expediently has, on the outer periphery of its cross-section through which its longitudinal axis (L12) passes, a flat shape with opposite flat sides (67) and narrow sides (68) extending between the flat sides (67), wherein advantageously it is provided that the connection support body (60; 160) has at least two shell-like partial bodies for covering a tensile element or connecting element (50) of the connecting device (70).

11. Connecting fitting according to any of the preceding claims, **characterised in that** the abutment support body (80; 180) and/or the anchor support body (20; 120) and/or a connection support body (60; 160) of the connecting device (70) have substantially the same cross-sectional geometries, and/or identical contours on the outer periphery of their cross-section through which their longitudinal axis (L11, L12, L13) passes, and/or that a connection support body (60; 160) of the connecting device (70) has substantially the same cross-sectional dimensions as the abutment support body (80; 180) and the anchor support body (20; 120).

12. Connecting fitting according to any of the preceding claims, **characterised in that** the connecting device (70) has at least one clamping bevel (84; 184) or an eccentric contour or a swivel bar (183) acting on a clamping surface or clamping link member for clamping the abutment module (13; 113) to the anchor module (11; 111), and/or that the connecting device (70) has two connecting elements (50; 150) which may be connected to one another to set a distance between the abutment module (13; 113) and the anchor module (11; 111) in at least two longitudinal positions relative to and differing from one another.

13. Connecting fitting according to any of the preceding claims, **characterised in that** the connecting device (70) has at least one bayonet locking device which may be brought by a rotary movement of less than 200°, preferably around 90°, into a locked position in which the connecting device (70) connects the respective components, in particular the anchor module (11; 111) to the abutment module (13; 113), or a connecting element (50; 150) to the anchor module (11; 111) or the abutment module (13; 113), with tension-resistance relative to a tensile axis, wherein advantageously it is provided that next to the bayonet locking device or on the bayonet locking device there are provided support faces to support the components joined together by the bayonet locking device transversely to the tensile axis, and/or that latching means for engaging the bayonet locking device in the locked position are provided, and/or that the bayonet locking device has a rotary stop for the locked position.

14. Connecting fitting according to any of the preceding claims, **characterised in that** the anchor module (11; 111) includes a head module (75; 175), identical in design to the abutment module (13; 113), and/or that the longitudinal axes (L11, L12) of the anchor module (11; 111) and the abutment module (13; 113) are parallel to one another, and/or that the anchor module (11; 111) includes a head module (75; 175) and a connection body for locating in the anchoring recess (211), wherein longitudinal axes (L11, L12, L13) of the head module (75; 175) and the connection body are at an angle, in particular a right-angle, to one another.

15. Method of connecting a first workpiece (200) and a second workpiece with the aid of a connecting fitting (10; 110), with the steps:
- anchoring of an anchor module (11; 111) of the connecting fitting (10; 110) in an anchoring recess (211) of the first workpiece (200)
- fitting of an abutment module (13; 113) of the connecting fitting (10; 110) in a abutment recess (213) of the second workpiece (250) for support on the second workpiece (250)
- arrangement of a connecting device (70) with clamping means (71) in a connection recess communicating with the abutment recess (213) and the anchoring recess (211) in the first and/or second workpiece for releasable connection and clamping of the abutment module (13; 113) to the anchor module (11; 111) along a clamping axis (S) for clamping of the first and second workpiece to one another, wherein the anchor module (11; 111) has an anchor support body (20; 120) for support at an inner periphery of the anchoring recess (211), and the abutment module (13; 113) has an abutment support body (80; 180) for support at an inner periphery of the abutment recess (213), wherein the anchor support body (20; 120) and the abutment support body (80; 180) have, on the outer periphery of their cross-section through which their respective longitudinal axis (L11, L12, L13) passes, a flat shape with opposite flat sides (27, 67, 87) and narrow sides (28, 68, 88), in particular rounded, extending between the flat sides (27, 67, 87), **characterised by**:
- assembly of the connecting fitting (10; 110) in such a way that the clamping axis (S) runs at an angle transversely to at least one of the longitudinal axes (L11, L12, L13) of anchor module (11; 111) or abutment module (13; 113), so that the anchor support body (20; 120) or the abutment support body (80; 180) rest with a flat side (27, 67, 87) or narrow side (28, 68, 88) on the inner periphery of the assigned anchoring recess (211) or abutment recess (213) transversely to the clamping axis (S), wherein the abutment support body (80; 180) and the anchor support body (20; 120) of the connecting device (70) have substantially the same cross-sectional dimensions, so that the anchoring recess (211) on the first workpiece (200) and the abutment recess (213) on the second workpiece (250) may be made with a single machining tool, without the need for changing or resetting the machining tool.

## Revendications

1. Ferrure de liaison servant à relier une première pièce (200) et une deuxième pièce, avec un module d'ancrage (11 ; 111) servant à ancrer la ferrure de liaison (10, 110) dans un évidement d'ancrage (211) de la première pièce (200) et un module de butée (13, 113) servant à prendre appui dans un évidement de butée (213) de la deuxième pièce (250), et avec un dispositif de liaison (70) présentant des moyens de tension (71), destiné à être disposé dans un évidement de liaison communiquant avec l'évidement de butée (213) et l'évidement d'ancrage (211) dans la première et/ou la deuxième pièce et servant à relier et à assembler par tension de manière amovible le module de butée (13, 113) au module d'ancrage (11 ; 111) le long d'un axe de tension (S) pour un assemblage par tension de la première et de la deuxième pièce l'une à l'autre, dans lequel le module d'ancrage (11 ; 111) présente un corps d'appui d'ancrage (20 ; 120) destiné à venir en appui au niveau d'une périphérie intérieure de l'évidement d'ancrage (211) et le module de butée (13, 113) présente un corps d'appui de butée (80 ; 180) destiné à prendre appui au niveau d'une périphérie intérieure de l'évidement de butée (213), dans lequel le corps d'appui d'ancrage (20 ; 120) et le corps d'appui de butée (80 ; 180) présentent au niveau de la périphérie extérieure de leur section transversale traversée par leur axe longitudinal (L11, L12, L13) respectif une forme plate avec des côtés plats (27, 67, 87) se faisant face les uns les autres et des côtés étroits (28, 68, 88) en particulier arrondis s'étendant entre les côtés plats (27, 67, 87), et dans lequel dans l'état monté de la ferrure de liaison (10, 110), l'axe de tension (S) s'étend de manière transversale par rapport à au moins un des axes longitudinaux (L11, L12, L13) du module d'ancrage (11 ; 111) ou du module de butée (13, 113) selon un angle si bien que le corps d'appui d'ancrage (20 ; 120) ou le corps d'appui de butée (80 ; 180) prend appui par un côté plat (27, 67, 87) ou un côté étroit (28, 68, 88) au niveau de la périphérie intérieure de l'évidement d'ancrage (211) ou de l'évidement de butée (213) associé de manière transversale par rapport à l'axe de tension (S), **caractérisée en ce que** le corps d'appui de butée (80 ; 180) et le corps d'appui d'ancrage (20 ; 120) du dispositif de liaison (70) présentent sensiblement les mêmes dimensions de section transversale.

2. Ferrure de liaison selon la revendication 1, **caractérisée en ce que** dans l'état monté de la ferrure de liaison (10, 110), les axes longitudinaux (L11, L12, L13) du module d'ancrage (11 ; 111) et du module de butée (13, 113) s'étendent de manière transversale les uns par rapport aux autres et/ou les moyens de tension (71) agissent exclusivement entre le dispositif de liaison (70) et le corps d'appui d'ancrage (20 ; 120) ou le corps d'appui de butée (80 ; 180) associé.

3. Ferrure de liaison selon la revendication 1 ou 2, **caractérisée en ce que** le dispositif de liaison (70) est configuré de telle manière qu'il peut être retiré du module d'ancrage (11 ; 111) et/ou du module de butée (13, 113) et/ou ne fait pas saillie de l'évidement d'ancrage (211) ou de l'évidement de butée (213) ou de l'évidement de liaison quand le module d'ancrage (11 ; 111) est logé dans l'évidement d'ancrage (211) et le module de butée (13, 113) est logé dans l'évidement de butée (213).

4. Ferrure de liaison (10, 110) selon l'une quelconque des revendications précédentes, **caractérisée en ce que** le module d'ancrage (11 ; 111) présente au moins un corps de serrage (22 ; 122), en particulier au moins un bras de serrage, lequel peut être amené par un corps d'actionnement (40 ; 140) depuis une position de desserrage, dans laquelle le module d'ancrage (11 ; 111) peut être introduit dans l'évidement d'ancrage (211), dans une position de serrage, dans laquelle le corps de serrage (22 ; 122) est serré contre une périphérie intérieure de l'évidement d'ancrage (211), dans laquelle il est prévu de manière avantageuse que le module d'ancrage (11 ; 111) présente au moins deux corps de serrage (22 ; 122) pouvant être amenés dans la position de serrage à la manière d'un pied d'écartement par le corps d'actionnement (40 ; 140), en particulier des bras de serrage ou des bras d'écartement, et/ou que le corps d'actionnement (40 ; 140) peut être relié au module d'ancrage (11 ; 111) en particulier à l'aide d'une liaison par vissage ou d'une liaison à tourillon enfichable de manière résistante à la traction par rapport à l'axe longitudinal (L11, L12, L13) du module d'ancrage (11 ; 111) et est configuré pour relier le module d'ancrage (11 ; 111) au module de butée (13, 113).

5. Ferrure de liaison selon la revendication 4, **caractérisée en ce que** le corps d'actionnement (40 ; 140) présente un tourillon enfichable (147), qui peut être enfiché dans une ouverture d'enfichage du module d'ancrage (11 ; 111), et présente une surface de refoulement, en particulier un contour excentrique, qui refoule par le vrillage du corps d'actionnement (40 ; 140) dans le module d'ancrage (11 ; 111) l'au moins un corps de serrage (22 ; 122) dans la position de serrage.

6. Ferrure de liaison selon la revendication 5, **caractérisée en ce que** le tourillon enfichable (147) présente un contour périphérique extérieur et l'ouverture d'enfichage présente un contour périphérique intérieur, qui permettent dans une première position angulaire d'enfichage, prévue pour enficher le tourillon enfichable (147) dans l'ouverture d'enfichage, du tourillon enfichable (147) et dans l'ouverture d'enfichage, par rapport à l'axe d'enfichage (T) un déplacement longitudinal du corps d'actionnement (40 ; 140) et du module d'ancrage (11 ; 111) et maintiennent, dans la position angulaire de serrage associée à la position de serrage et vrillée par rapport à la position angulaire d'enfichage, le corps d'actionnement (40 ; 140) de manière résistante à la traction par rapport à l'axe d'enfichage (T) ou à l'axe longitudinal (L11, L12, L13) au niveau du module d'ancrage (11 ; 111).

7. Ferrure de liaison selon l'une quelconque des revendications 4 à 6, **caractérisée en ce qu'**est prévue au niveau du corps d'actionnement (40 ; 140) et/ou au niveau du module d'ancrage (11 ; 111), en particulier de l'au moins un corps de serrage (22 ; 122), une zone de déformation, qui peut être déformée durablement par un ajustement du corps d'actionnement (40 ; 140) en direction de la position de serrage de l'au moins un corps de serrage (22 ; 122).

8. Ferrure de liaison selon l'une quelconque des revendications précédentes, **caractérisée en ce que** le module d'ancrage (11 ; 111), en particulier l'au moins un corps de serrage (22 ; 122) ou le corps d'appui d'ancrage (20 ; 120) du module d'ancrage (11 ; 111), présente au moins une partie faisant saillie à complémentarité de forme (25), en particulier un nervurage ou une structure dentée, destinée à être reliée par complémentarité de forme à l'évidement d'ancrage (211) et/ou au moins une surface à liaison par friction destinée à être reliée par liaison à friction à l'évidement d'ancrage (211) et/ou au moins un contour à enfoncer destiné à être enfoncé dans la première pièce (200).

9. Ferrure de liaison selon l'une quelconque des revendications précédentes, **caractérisée en ce que** le dispositif de liaison (70) comprend un élément de liaison (50 ; 150) configuré en particulier en tant que module de liaison (12 ; 112), destiné à être disposé entre le module d'ancrage (11 ; 111) et le module de butée (13, 113), dans laquelle dans l'état monté un axe longitudinal (L12) du module de liaison (12 ; 112) ou de l'élément de liaison (50 ; 150) s'étend de manière avantageuse de manière parallèle ou de manière coaxiale avec l'axe longitudinal (L11, L13) du module d'ancrage (11 ; 111).

10. Ferrure de liaison selon l'une quelconque des revendications, **caractérisée en ce que** le dispositif de liaison (70) présente un corps d'appui de liaison (60 ; 160) destiné à venir en appui au niveau d'une périphérie intérieure de l'évidement de liaison s'étendant entre l'évidement de butée (213) et l'évidement d'ancrage (211), dans laquelle le corps d'appui de liaison (60 ; 160) présente de manière opportune au niveau de la périphérie extérieure de sa section transversale traversée par son axe longitudinal (L12) une forme plate avec des côtés plats (67) se faisant face les uns les autres et des côtés étroits (68) s'étendant entre les côtés plats (67), dans laquelle il est prévu de manière avantageuse que le corps d'appui de liaison (60 ; 160) présente au moins deux corps partiels de type coques servant à envelopper un élément de traction ou un élément de liaison (50) du dispositif de liaison (70).

11. Ferrure de liaison selon l'une quelconque des revendications précédentes, **caractérisée en ce que** le corps d'appui de butée (80 ; 180) et/ou le corps d'appui d'ancrage (20 ; 120) et/ou un corps d'appui de liaison (60 ; 160) du dispositif de liaison (70) présentent sensiblement les mêmes géométries de section transversale et/ou ont un contour identique au niveau de la périphérie extérieure de leur section transversale traversée par leur axe longitudinal (L11, L12, L13), et/ou qu'un corps d'appui de liaison (60 ; 160) du dispositif de liaison (70) présente sensiblement les mêmes dimensions de section transversale que le corps d'appui de butée (80 ; 180) et le corps d'appui d'ancrage (20 ; 120).

12. Ferrure de liaison selon l'une quelconque des revendications précédentes, **caractérisée en ce que** le dispositif de liaison (70) présente au moins un chanfrein de tension (84 ; 184) ou un contour excentrique ou un verrou pivotant (183) agissant sur une surface de tension ou une coulisse de tension servant à assembler par tension le module de butée (13, 113) au module d'ancrage (11 ; 111), et/ou que le dispositif de liaison (70) présente deux éléments de liaison (50 ; 150), qui peuvent être reliés l'un à l'autre pour régler une distance entre le module de butée (13, 113) et le module d'ancrage (11 ; 111) dans au moins deux positions longitudinales différentes l'une de l'autre l'un par rapport à l'autre.

13. Ferrure de liaison selon l'une quelconque des revendications précédentes, **caractérisée en ce que** le dispositif de liaison (70) présente au moins un verrouillage à baïonnette, qui peut être amené par un déplacement de rotation inférieur à 200°, de préférence d'environ 90°, dans une position de verrouillage, dans laquelle le dispositif de liaison (70) relie les uns aux autres les composants respectifs, en particulier le module d'ancrage (11 ; 111) au module de butée (13, 113) ou un élément de liaison (50 ; 150) au module d'ancrage (11 ; 111) ou au module de butée (13, 113), par rapport à un axe de traction de manière résistante à la traction, dans laquelle il est prévu de manière avantageuse que sont prévues, à côté du verrouillage à baïonnette ou au niveau du verrouillage à baïonnette, des surfaces d'appui servant à soutenir les composants reliés les uns aux autres par le verrouillage à baïonnette de manière transversale par rapport à l'axe de traction, et/ou que des moyens d'enclenchement sont prévus pour enclencher le verrouillage à baïonnette dans la position de verrouillage, et/ou que le verrouillage à baïonnette présente une butée de rotation pour la position de verrouillage.

14. Ferrure de liaison selon l'une quelconque des revendications précédentes, **caractérisée en ce que** le module d'ancrage (11 ; 111) comprend un module de tête (75 ; 175) de structure identique à celle du module de butée (13, 113), et/ou que les axes longitudinaux (L11, L12) du module d'ancrage (11 ; 111) et du module de butée (13, 113) sont parallèles les uns par rapport aux autres, et/ou que le module d'ancrage (11 ; 111) comprend un module de tête (75 ; 175) et un corps de liaison destiné à être disposé dans l'évidement d'ancrage (211), dans laquelle des axes longitudinaux (L11, L12, L13) du module de tête (75 ; 175) et du corps de liaison forment un angle les uns par rapport aux autres, en particulier un angle droit.

15. Procédé servant à relier une première pièce (200) et une deuxième pièce à l'aide d'une ferrure de liaison (10, 110), avec les étapes :
- d'ancrage d'un module d'ancrage (11 ; 111) de la ferrure de liaison (10, 110) dans un évidement d'ancrage (211) de la première pièce (200) ;
- de disposition d'un module de butée (13, 113) de la ferrure de liaison (10, 110) dans un évidement de butée (213) de la deuxième pièce (250) pour venir en appui au niveau de la deuxième pièce (250) ;
- de disposition d'un dispositif de liaison (70) présentant des moyens de tension (71) dans un évidement de liaison communiquant avec l'évidement de butée (213) et l'évidement d'ancrage (211) dans la première et/ou la deuxième pièce pour relier et assembler par tension de manière amovible le module de butée (13, 113) au module d'ancrage (11 ; 111) le long d'un axe de tension (S) pour un assemblage par tension de la première et de la deuxième pièce l'une à l'autre,
dans lequel le module d'ancrage (11 ; 111) présente un corps d'appui d'ancrage (20 ; 120) servant à venir en appui au niveau d'une périphérie intérieure de l'évidement d'ancrage (211) et le module de butée (13, 113) présente un corps d'appui de butée (80 ; 180) servant à venir en appui au niveau d'une périphérie intérieure de l'évidement de butée (213), dans lequel le corps d'appui d'ancrage (20 ; 120) et le corps d'appui de butée (80 ; 180) présentent au niveau de la périphérie extérieure de leur section transversale traversée par leur axe longitudinal (L11, L12, L13) respectif, une forme plate avec des côtés plats (27, 67, 87) se faisant face les uns les autres et des côtés étroits (28, 68, 88) en particulier arrondis s'étendant entre les côtés plats (27, 67, 87), **caractérisé par** :
- le montage de la ferrure de liaison (10, 110) de telle manière que l'axe de tension (S) s'étend de manière transversale par rapport à au moins un des axes longitudinaux (L11, L12, L13) du module d'ancrage (11 ; 111) ou du module de butée (13, 113) selon un angle si bien que le corps d'appui d'ancrage (20 ; 120) ou le corps d'appui de butée (80 ; 180) prend appui par un côté plat (27, 67, 87) ou un côté étroit (28, 68, 88), au niveau de la périphérie intérieure de l'évidement d'ancrage (211) ou de l'évidement de butée (213) associé de manière transversale par rapport à l'axe de tension (S), dans lequel le corps d'appui de butée (80 ; 180) et le corps d'appui d'ancrage (20 ; 120) du dispositif de liaison (70) présentent sensiblement les mêmes dimensions de section transversale si bien que l'évidement d'ancrage (211) au niveau de la première pièce (200) et l'évidement de butée (213) au niveau de la deuxième pièce (250) peuvent être fabriqués avec un outil d'usinage unique, sans avoir à changer ou à régler à nouveau l'outil d'usinage.
